# EUROPEAN PATENT APPLICATION

(11) **EP 4 109 264 A1**
(43) Date of publication of application: **28.12.2022**
(21) Application number: 22162819.1
(22) Date of filing: 17.03.2022
(51) Int. Cl.: G06F 9/54, H04L 49/00, H04L 49/90

(54) **INFORMATION PROCESSING APPARATUS, INFORMATION PROCESSING PROGRAM, AND METHOD FOR PROCESSING INFORMATION**

(30) Priority: 25.06.2021 JP 2021105406
(71) Applicant: FUJITSU LIMITED, Kawasaki-shi, Kanagawa 211-8588 (JP)
(72) Inventor: MIYASHITA, Ryo, Kawasaki-shi, Kanagawa, 211-8588 (JP)
(74) Representative: Haseltine Lake Kempner LLP

(57) **Abstract**

An apparatus includes: a storing device (3A) including regions allocated to virtual machines (VMs); a processing device (2A) executing the VMs; a relay device (4A) executing a relaying process; and a transfer processor (52A) transferring data between the regions. The processing device (2A) stores a first and second numbers associated with a used entry among first entries allocated to the transfer processor (52A) and a used entry among second entries allocated to the relay device (4A), respectively, the first and second numbers being included in numbers associated with entries of a reception buffer (32) in a first region allocated to a first VM; and sets a smaller first and second numbers in the processing device (2A) to a number being set in the first region and representing an entry of data read from the reception buffer (32).

## Description

### TECHNICAL FIELD

The embodiment discussed herein is related to an information processing apparatus, an information processing program, and a method for processing information.

### BACKGROUND ART

Network Function Virtualization (NFV) is known as a technique that implements a network function, which has been achieved by a dedicated device, by means of software on a general-purpose information processing apparatus. The NFV activates multiple Virtual Network Functions (VNFs) on a single information processing apparatus through the use of a technique of virtualization of the information processing apparatus and thereby connects a VNF to a VNF or to an external network (NW), using a virtual switch, for example. Here, a VNF is executed, for example, in a virtual machine (VM) that information processing apparatus executes.

In an NFV, communication in the information processing apparatus, i.e., the host, is greatly increased due to, for example, service chain as compared with a conventional virtualization environment, which makes the relaying performance of the virtual switch crucial. However, a virtual switch implemented by software has a large variation in processing delay and processing time and is sometimes difficult to satisfy the performance required for an NFV. In addition, a software-implemented virtual switch causes heavy loads on a processor (processing device) in packet relaying, which may result in wasting the processing resources that the processor provides to applications.

As a solution to the above, the relaying function of the virtual switch is offloaded to hardware of a communication device (relay device) such as a Network Interface Card (NIC) .

Examples of the hardware such as an NIC include a Field Programmable Gate Array (FPGA)-NIC, or a smart NIC. An FPGA-NIC is an NIC equipped with an FPGA and achieves the relaying function of a virtual switch by means of FPGA. In addition, a smart NIC is a programmable NIC, which achieves the relaying function of a virtual switch by means of a program.

Such a communication device is connected to the processor via an Input/Output (I/O) bus and achieves communication between VMs, which operate by using VM memories of a host memory (storing device), by data transfer between the VM memories through the I/O bus and the processor.

### CITATION LIST

### PATENT DOCUMENT

[Patent Document 1] Japanese Laid-open Patent Publication No. 2015-197874
[Patent Document 2] Japanese Laid-open Patent Publication No. 2021-048513

### SUMMARY OF INVENTION

### PROBLEM TO BE SOLVED BY INVENTION

By offloading the relay function of the virtual switch to the communication device, all packets pass through the communication device. For example, packet forwarding in the information processing apparatus by the communication device causes each packet to pass through the I/O bus twice of reading of the packet from a VM memory of the forwarding source and writing of the packet to a VM memory of the forwarding destination.

Therefore, when the packet satisfies a given condition, the relaying process performed by the processor may have, for example, a smaller communication delay than the relaying process performed by the communication device. An example of the given condition is that a packet forwarding is within the information processing apparatus and that the processing load of the relaying process by means of software in the processor is small. As described above, in the communication device that offloads the relay function of the virtual switch, the data forwarding performance may be degraded.

As one aspect, one of the objects of the present invention is to suppress lowering of data transfer performance in a relay device that performs a relaying process, serving as a virtual switch that connects the multiple virtual machines to one another.

According to an aspect of the embodiments, an information processing apparatus includes: a storing device comprising a plurality of storing regions allocated one to each of a plurality of virtual machines; a processing device that is connected to the storing device and that executes the plurality of virtual machines; a relay device that is connected to the processing device and that executes a relaying process, serving as a virtual switch that connects the plurality of virtual machines to one another; and a transfer processor that transfers data between the plurality of storing regions, wherein the processing device stores a first used identification number associated with a used entry among a plurality of first entries allocated to the transfer processor and a second used identification number associated with a used entry among a plurality of second entries allocated to the relay device, the first used identification number and the second used identification number being included in a plurality of identification numbers each associated with one of a plurality of entries of a reception buffer included in a first storing region allocated to a first virtual machine among the plurality of virtual machines; and sets a smaller one of the first used identification number and the second used identification number stored in the processing device, to an identification number being set in the first storing region and representing an entry of data read from the reception buffer by the first virtual machine.

### EFFECT OF INVENTION

In one aspect, it is possible to suppress lowering of data transfer performance in a relay device that performs a relaying process, serving as a virtual switch that connects the multiple virtual machines to one another.

### BRIEF DESCRIPTION OF DRAWINGS

FIG. 1 is a diagram illustrating an example of a software relaying process;
FIG. 2 is a diagram illustrating an example of a relaying process by virtual switch offloading;
FIG. 3 is a diagram briefly illustrating a scheme of one embodiment;
FIG. 4 is a block diagram illustrating an example of a configuration of a server according to the one embodiment;
FIG. 5 is a diagram illustrating an example of connection of a processor that executes a virtual switch, a host memory, and a communication device;
FIG. 6 is a diagram illustrating an example of a processor that executes a virtual switch, a host memory, and a communication device;
FIG. 7 is a diagram illustrating an example of operation of an initializing process in a server;
FIG. 8 is a diagram illustrating an example of operation of a flow registering process in the server;
FIG. 9 is a flow diagram illustrating an example of the operation of the flow registering process in the server;
FIG. 10 is a diagram illustrating an example of operation of a memory copying process in the server;
FIG. 11 is a flow diagram illustrating an example of the operation of the memory copying process in the server;
FIG. 12 is a diagram illustrating an example of operation of a forwarding process in the server;
FIG. 13 is a flow diagram illustrating an example of the operation of the forwarding process in the server;
FIG. 14 is a diagram illustrating an example of operation of a waiting process in the server;
FIG. 15 is a flow diagram illustrating an example of the operation of the waiting process in the server;
FIG. 16 is a diagram illustrating an example of a receiving process of data in a server according to a comparative example;
FIG. 17 is a diagram illustrating an example of a descriptor of a reception queue;
FIG. 18 is a diagram illustrating an example of distributing entries (elements) of the reception queue;
FIG. 19 is a diagram illustrating an example of a receiving process in the server according to the one embodiment;
FIG. 20 is a diagram illustrating an example of the configuration related to the receiving process of the server;
FIG. 21 is a diagram illustrating an example of connection of a processor that executes the virtual switch, the host memory, and the communication device;
FIG. 22 is a diagram illustrating another example of connection of a processor that executes the virtual switch, the host memory, and the communication device;
FIG. 23 is a diagram illustrating an example of operation of an initializing process in a server;
FIG. 24 is a diagram illustrating an example of operation of a buffer allocating process in the server;
FIG. 25 is a flow diagram illustrating an example of operation of a buffer allocating process in the server;
FIG. 26 is a diagram illustrating an example of operation of a receiving process of data in memory copying performed in the server;
FIG. 27 is a flow diagram illustrating an example of operation of a receiving process of data in memory copying performed in the server;
FIG. 28 is a diagram illustrating an example of a receiving process of data in a forwarding process performed in the server;
FIG. 29 is a flow diagram illustrating an example of operation of the forwarding process in the server;
FIG. 30 is a flow diagram illustrating an example of operation of a receiving process illustrated in FIG. 29;
FIG. 31 is a diagram illustrating an example of operation of a notifying process of reception to the VM in the server;
FIG. 32 is a diagram illustrating an example of operation of the notifying process of reception to the VM in the server;
FIG. 33 is a flow diagram illustrating an example of operation of the notifying process of reception to the VM in the server;
FIG. 34 is a diagram illustrating an example of operation of a buffer distributing process (when reallocation) in the sever;
FIG. 35 is a diagram illustrating an example of operation of a releasing process (for a copying unit) of an unreceived buffer in the server;
FIG. 36 is a flow diagram illustrating an example of operation of the releasing process (for the copying unit) of an unreceived buffer in the server;
FIG. 37 is a diagram illustrating an example of operation of a releasing process (for a communication unit) of an unreceived buffer in the server;
FIG. 38 is a flow diagram illustrating an example of operation of the releasing process (for the communication unit) of an unreceived buffer in the server;
FIG. 39 is a flow diagram illustrating an example of operation of the releasing process (for the communication unit) of an unreceived buffer in the server; and
FIG. 40 is a block diagram illustrating an example of a hardware (HW) configuration of a computer that achieves the function of the server.

### DESCRIPTION OF EMBODIMENT(S)

Hereinafter, embodiments of the present invention will now be described with reference to the accompanying drawings. However, the embodiments described below are merely illustrative and are not intended to exclude the application of various modifications and techniques not explicitly described below. For example, the present embodiment can be variously modified and implemented without departing from the scope thereof.

In the accompanying drawings to be used in the following description, like reference number designates the same or substantially the same parts and elements unless specified otherwise.

### (1) One Embodiment:

### (1-1) Virtual Switch:

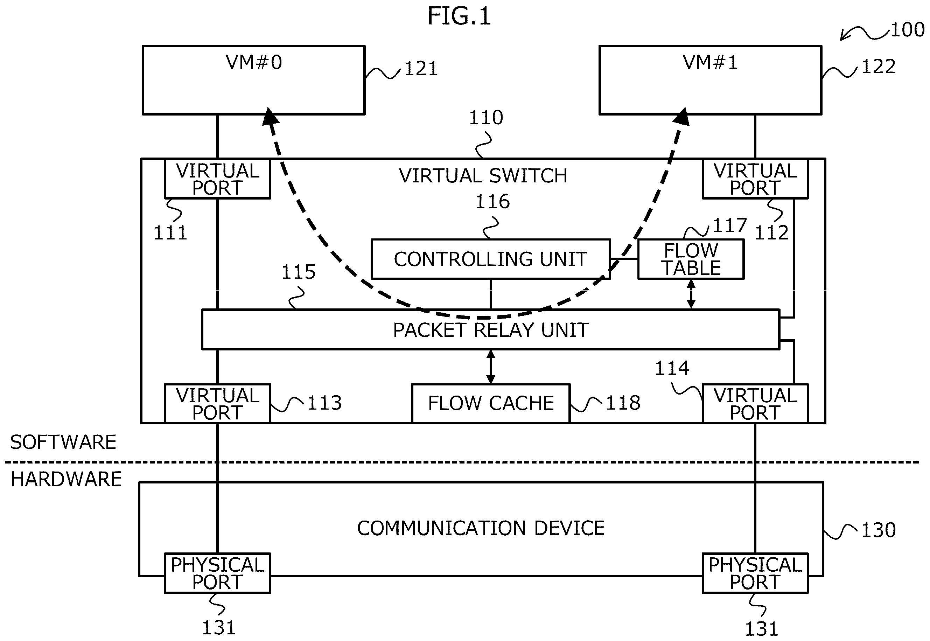

FIG. 1 is a diagram illustrating an example of a software relaying process. As illustrated in FIG. 1, in a server 100 which is an example of a host in a virtual environment, communication between a memory 121 of a VM #0 and a memory 122 of a VM #1 passes through a virtual switch 110 by software of a processor.

In a relaying process of the virtual switch 110, a packet relay unit 115 retrieves a flow that matches a condition for a packet from a flow table 117 through a controlling unit 116, and applies the action of the obtained flow to the packet and forwards (transfers) the packet. In one embodiment, the flow may mean a set (combination) of a header field of a packet in which a condition for identifying a packet is set and an action (operation) to be applied to the packet. The action may include types such as forwarding (Forward) that transmits the packet from specified virtual ports 111 to 114, modifying (Modify) that rewrites the packet header, dropping (Drop) that discards the packet, and the like.

In the virtual switch 110, a flow cache 118 may be used to speed up the relaying process. The flow cache 118 temporarily holds the information on a flow that has been input most recently. As a result, the packet relay unit 115 can retrieve a flow at high speed without using the controlling unit 116. A flow not hit in the flow cache 118 is retrieved from the flow table 117, and the obtained flow is registered in the flow cache 118.

In the above manner, the processor performs a memory copying from the VM 121 to the VM 122 (see a broken arrow in FIG. 1) in the server 100.

Incidentally, a communication device 130 performs communication of packets with an external device of the server 100 through at least one of physical ports 131.

In the example of FIG. 1, the processing load on the processor increases because the virtual switch 110 retrieves, each time receiving a packet, a flow from the flow table 117 and/or the flow cache 118 for the manner to process the packet.

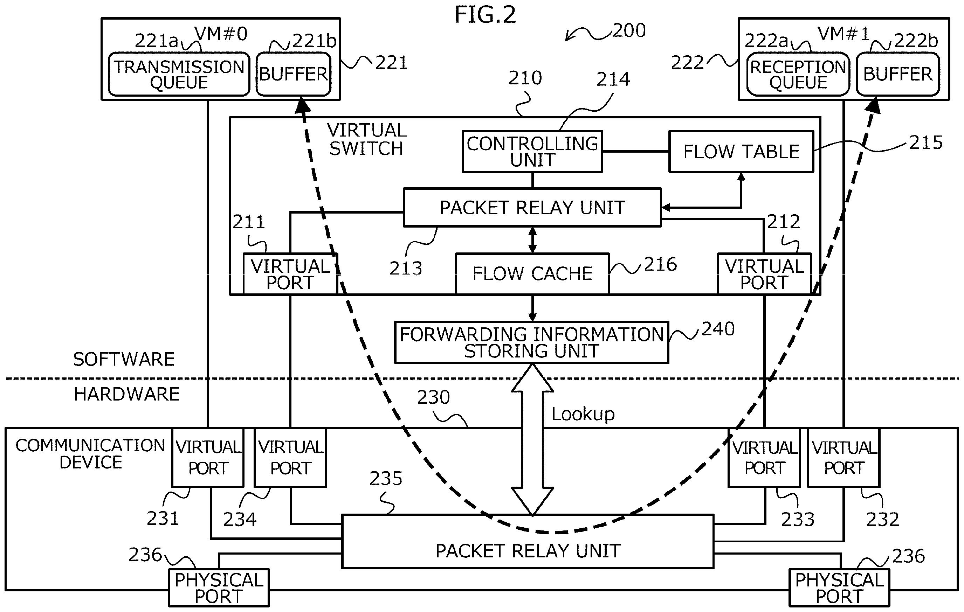

FIG. 2 is a diagram illustrating an example of a relaying process by virtual switch offloading. FIG. 2 illustrates an example of a server 200 that offloads a relaying process, having a high processing load and including a flow retrieving process and an action applying process in a virtual switch 210, from the virtual switch 210 to a communication device 230. FIG. 2 illustrates an example in which the packet relay unit 115 and the virtual ports 111 and 112 of the virtual switch 110 (see FIG. 1) except for the controlling unit 116 that manages, for example, the flow table 117 in the virtual switch 110 are offloaded to the communication device 230. As will be described below, the virtual switch 210 includes virtual ports 211 and 212 connected to the communication device 230, a packet relay unit 213, a controlling unit 214, a flow table 215, and a flow cache 216 in order to retrieve an action of a flow that the communication device 230 did not find.

When registering a flow into the flow cache 216, the virtual switch 210 registers the flow also in a forwarding information storing unit 240 which is a storing region that stores flows, which makes it possible to perform the flow retrieving process and the action applying process in the communication device 230. Consequently, a packet relay unit 235 of the communication device 230 can relay a packet corresponding to the same flow as that stored in the forwarding information storing unit 240 with reference to the forwarding information storing unit 240, thereby suppressing the waste of processor resources.

Hereinafter, description will now be made in relation to examples of communication within the server 200 from a VM 221 (VM #0) to a VM 222 (VM #1) when the flow is registered in the forwarding information storing unit 240 and when the flow is not registered in the forwarding information storing unit 240.
(a) When the flow is registered in the forwarding information storing unit 240:
   The communication device 230 monitors a transmission queue 221a of the VM 221, and starts a transmitting process when the transmission queue 221a is updated. The communication device 230 performs a flow retrieval (lookup) from the forwarding information storing unit 240, and forwards a packet in a buffer 221b of the VM 221 to a buffer 222b of the VM 222 through a virtual port 231, the packet relay unit 235, and a virtual port 232 according to an action of a flow. In addition, the communication device 230 sets information representing completion of transmitting in a reception queue 222a of the VM 222.
(b) When the flow is not registered in the forwarding information storing unit 240:
   When the flow is not registered in the forwarding information storing unit 240, the communication device 230 forwards the packet from the packet relay unit 235 to the virtual switch 210 through a virtual port 233. The virtual switch 210 retrieves, for the packet received at the virtual port 212, a flow that matches the condition from the flow table 215, applies the action of the matched flow to the packet, and transmits the packet to a virtual port 234 of the communication device 230 via the virtual port 211. The communication device 230 forwards the packet received from the virtual port 234 to the buffer 222b of the destination VM 222 through the virtual port 232 by the packet relay unit 235.

The virtual ports 233 and 234 may be referred to as exception ports because these ports are used to access the virtual switch 210 when the flow is not registered in the forwarding information storing unit 240, in other words, a case of an exception.

In the virtual switch 210, since destination resolution of a packet is performed when an action is applied to the packet, the communication device 230 can skip the flow retrieval from the forwarding information storing unit 240 when performing the relaying process of a packet received from the virtual port 234.

Furthermore, the virtual switch 210 registers the flow retrieved from the flow table 215 into the flow cache 216 and the forwarding information storing unit 240. This makes the communication device 230 possible to forward the next and subsequent packets corresponding to the same flow without passing through the virtual switch 210 in the above scheme (a).

The communication device 230 may cause the packet relay unit 235 to forward (relay) a packet received at a physical port 236 and/or a packet to be forwarded from the physical port 236 in the above scheme (a) or (b).

In the above manner, in the server 200, the communication device 230 performs memory copying from the VM 221 to the VM 222 (see the broken arrow in FIG. 2). As illustrated in FIG. 2, by offloading the packet relaying process to the communication device 230, all packets pass through the communication device 230.

In the server 200, the communication device 230 is connected to a processor (not illustrated) that executes the virtual switch 210 via an I/O bus. Thus, that all packets pass through the communication device 4 means that the packets pass through the I/O bus twice in communication within the server 200. For example, communication within the server 200 under a particular case more delays than relaying performed by means of software illustrated in FIG. 1.

The particular case includes, for example, any one of the following cases or a combination of two or more of the following cases.
- The number of flows registered in the flow table 215 is a given number or less, and the flow retrieving process by the virtual switch 210 ends early.
- The header field of a packet does not specify a bitmask or wildcard, and the flow can be searched in the hash method.
- The header field does not undergo a changing process, for example and the action of the flow to be applied to the packet is only forwarding.

With the foregoing in view, description of one embodiment will now be made in relation a scheme that suppresses a lowering of data forwarding performance in a communication device that executes a relaying process as a virtual switch that connects multiple VMs.

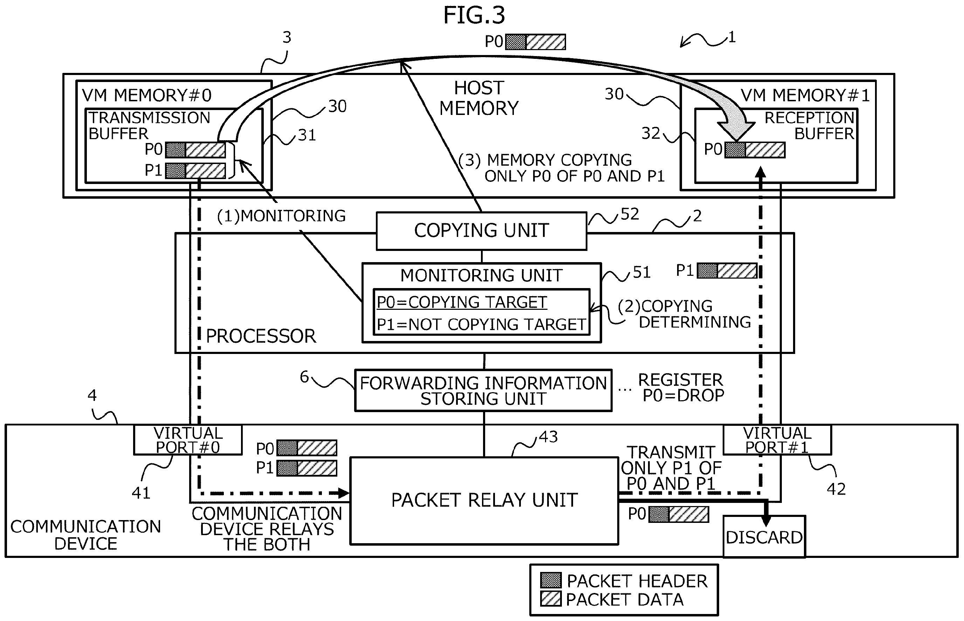

FIG. 3 is a diagram briefly illustrating a scheme according to the one embodiment. A server 1 according to an embodiment is an example of an information processing apparatus or a computer, and as illustrated in FIG. 3, the server 1 may illustratively include a processor 2, a host memory 3, a communication device 4, a monitoring unit 51, a copying unit 52, and a forwarding information storing unit 6.

The processor 2 is an integrated circuit (IC) that performs various controls and arithmetic operations in the server 1 and is an example of a processing device, or an arithmetic operation processing device. In the one embodiment, the processor 2 is connected to the host memory 3 and executes multiple virtual machines (VMs) #0 and #1 using at least a part of the storing region of the host memory 3.

The processor 2 may be a multi-core processor including multiple cores or a multi-processor including multiple processors. Examples of the processor 2 may be any one of integrated circuits such as a Central Processing Unit (CPU), a Micro Processing Unit (MPU), a Graphics Processing Unit (GPU), a Digital Signal Processor (DSP), an Application Specific Integrated Circuit (ASIC), and a Programmable Logic Device (PLD) (e.g., Field Programmable Gate Array (FPGA)), or a combination of two or more of these integrated circuits.

The host memory 3 may include a storing region for storing a program and data executed by the processor 2. An example of the host memory 3 may be a volatile memory, such as a Dynamic Random Access Memory (DRAM).

The host memory 3 according to the one embodiment may include a VM memory 30 for VMs. In the example of FIG. 3, the host memory 3 includes a VM memory #0 for the VM #0 and a VM memory #1 for the VM #1. In other words, the host memory 3 is an example of a storing device having multiple storing regions allocated one to each of the multiple virtual machines.

The VM memory 30 may store various data to be used to execute the VM, which data is exemplified by a program of a virtual Operating System (OS), control data, and data. Each VM memory 30 may be, for example, a portion of the storing region of the host memory 3 and, for example, may be allocated, as a ring buffer, to a VM.

The communication device 4 is a device that carries out communication and is an example of a programmable communication device exemplified by an NIC, such as an FPGA-NIC or a smart NIC. To the communication device 4 of the one embodiment, at least a relaying process among functions that the virtual switch executes may be offloaded. The communication device forwards, in the relaying process, data that each of multiple VM memories stores.

As the above, the communication device 4 is an example of a relay device that is connected to the processor 2 and performs a relaying process, serving as a virtual switch that connects multiple VMs to one another.

The monitoring unit 51 determines whether or not the header of the data being to be transmitted and being stored in a first VM memory 30 among the multiple VM memories 30 satisfies a given condition. For example, the monitoring unit 51 may be implemented as software achieved by the processor 2 executing a program expanded in the host memory 3.

For example, the monitoring unit 51, as illustrated in FIG. 3, monitors (in other words, snoops) packets P0 and P1 that a transmission buffer 31 of the VM memory #0 serving as an example of the first VM memory 30 stores (see Arrow (1)). Then, the monitoring unit 51, based on the monitoring result, determines whether to copy each packet between the VM memories 30 (see Arrow (2)).

The copying unit 52 is an example of a forwarding unit that performs data forwarding between the multiple VM memories 30. For example, the copying unit 52 may be implemented as software achieved by the processor 2 executing a program expanded in the host memory 3. Alternatively, the copying unit 52 may be a device that copies data between the VM memories 30 without passing through the processor 2, and may be exemplified by a Direct Memory Access (DMA) device.

When the monitoring unit 51 determines that the header satisfies the given condition, the copying unit 52 forwards the data to be transmitted from the first VM memory 30 to a second VM memory 30 that is the destination of the data in a path not being used in the relaying process by the communication device 4.

For example, as illustrated in FIG. 3, when the monitoring unit 51 determines that the header of a packet P0 among packets P0 and P1 satisfies the given condition, the monitoring unit 51 instructs the copying unit 52 to forward the packet P0 to be copied among the packets P0 and P1. The copying unit 52 copies only the packet P0 to be copied among the packets P0 and P1 stored in the transmission buffer 31 from the VM memory #0 to a reception buffer 32 in the VM memory #1 (see the Arrow (3)). The VM memory #0 is an example of the first storing region and the VM memory #1 is an example of the second storing region.

Thereby, the packet P0 can be forwarded between the VM memories 30 by, for example, a memory copying by the copying unit 52 through a path that does not pass through the communication device 4. Accordingly, in communication within the server 1, the specific data can be escaped from passing through the I/O bus between the processor 2 and the communication device 4 so that a delay in the communication within the server 1 can be abated.

The given condition used in the copy determination by the monitoring unit 51 includes, for example, one or both of a case where the delay time of the relaying process by the communication device 4 exceeds the delay time of the relaying process by the software, and a case where the flow is simple enough and the load on the processor 2 in the memory copying process is small. As an example, the given condition may be a case where, in communication within the same server 1, the destination can be specified by referring to a destination address (e.g., a destination MAC (Media Access Control) address) in the packet header of the flow, and also the action of the flow is only forwarding (Forward) .

Although it is possible to combine multiple operations exemplified by forwarding and modifying, such a combination of operations makes the operation complicated. In this case, copying process by the communication device 4 has a less delay than that by means of software. Considering the above, in order to reduce a delay in a copying process by means of software, excluding such a pattern in which the communication device 4 has a less delay, the given condition includes "a case where the action of the flow is only forwarding".

Further, in the one embodiment, the processor 2 may set the communication device 4 to, for example, suppress the forwarding of data having a header satisfying the given condition. This setting may be accomplished, for example, by settling setting information in the forwarding information storing unit 6 used for forwarding data by the communication device 4. For example, in the setting information, the operation that the communication device 4 performs on the data is set for each header of the data to be processed in the relaying process.

As an example, the processor 2 may set discarding of data associated with a header satisfying the given condition to an operation performed on the header in the setting information stored in the forwarding information storing unit 6. In the example of FIG. 3, the processor 2 may set the setting information indicating that the packet P0 is discarded (Drop) in the forwarding information storing unit 6.

Here, as illustrated in FIG. 3, the communication device 4 may include virtual ports 41 and 42 and a packet relay unit 43. The virtual ports 41 and 42 are each connected to the processor 2 via an I/O bus (not illustrated), and serve as interfaces that receive packets from the VM memories 30 and transmit packets to the VM memories 30 via the processor 2. The packet relay unit 43 carries out an action (operation) based on the setting information settled in the forwarding information storing unit 6 on packets received at the virtual port 41 or 42. Examples of the action include forwarding of packets to the virtual port 42 or 41, rewriting of a header of a packet, or discarding of a packet.

For example, as illustrated in FIG. 3, the communication device 4 relays both of the packets P0 and P1 received by the virtual port 41 (virtual port #0) to the packet relay unit 43. With reference to the forwarding information storing unit 6, the packet relay unit 43 discards the packet P0 and transmits the packet P1 from the virtual port 42 (virtual port #1) to the reception buffer 32 of the VM memory #1, which is the original forwarding destination of the packet. For the packet P1, the setting information indicating "forwarding" which is the original action is assumed to be set in the forwarding information storing unit 6.

As described above, in the server 1 according to the one embodiment, for example, the monitoring unit 51 can switch forwarding of the packet, when detecting the communication within the server 1 that satisfies the given condition, from the relaying by the communication device 4 to the memory copying by the copying unit 52.

In addition, the communication device 4 can inhibit the packet P0 copied by the monitoring unit 51 and the copying unit 52 performing the processing of Arrows (1) to (3) in FIG. 3, from being redundantly transmitted by the communication device 4 while suppressing modification to the circuitry, e.g., the communication device 230 as performed in FIG. 2.

Furthermore, the server 1 is inhibited from adding a process to be performed on a VM, such as determining switch of a forwarding path by recognizing a packet to be transmitted. Accordingly, this makes it possible to prevent the computational resources used by applications (e.g., user applications) on a VM from being consumed by processing on the side of the service infrastructure.

### (1-2) Example of Configuration of Server:

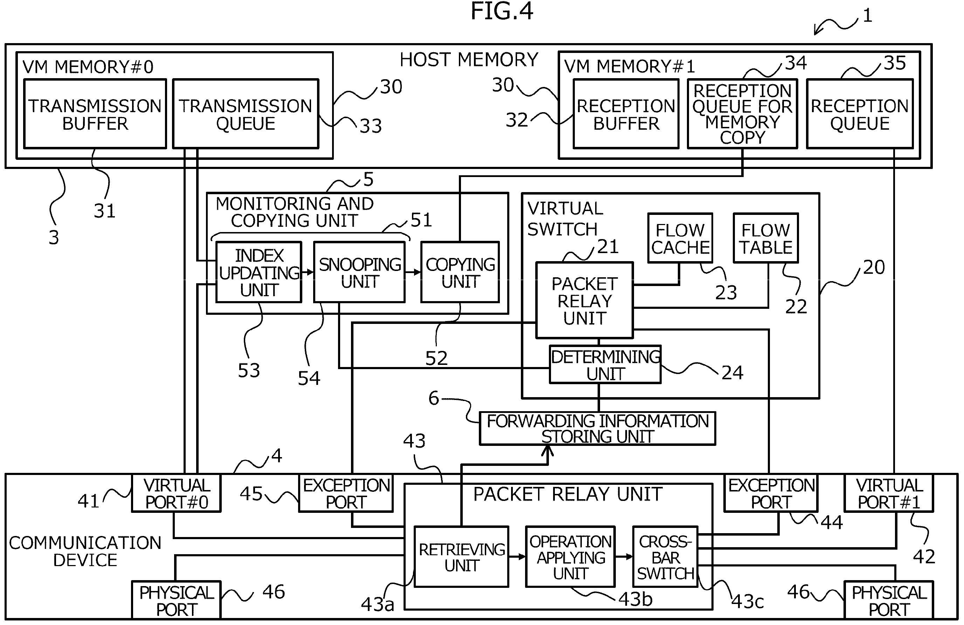

FIG. 4 is a block diagram illustrating an example of a configuration of the server 1 according to the one embodiment. As illustrated in FIG. 4, the server 1 according to the one embodiment may include, by way of example, a virtual switch 20, the host memory 3, the communication device 4, a monitoring and copying unit 5, and the forwarding information storing unit 6. The server 1 may include two or more communication devices 4.

The virtual switch 20 may be implemented, for example, as software achieved by the processor 2 executing a program expanded in the host memory 3.

The virtual switch 20 may include a packet relay unit 21, a flow table 22, a flow cache 23, and a determining unit 24.

The packet relay unit 21 receives a packet that has been missed (not hit) in the retrieval from the forwarding information storing unit 6 via an exception port 44 of the communication device 4, processes the packet, gives the information of the output port to the packet, and transmits the packet to an exception port 45 of the communication device 4. The process that the packet relay unit 21 performs on the packet may include, for example, retrieval from the flow table 22 by referring to the packet information, applying of the operation (Action) to the packet, registering of a flow into the flow cache 23, and registering of the flow into the forwarding information storing unit 6. In the one embodiment, the packet relay unit 21 may invoke a process of the determining unit 24 before registering a flow into the forwarding information storing unit 6.

The flow table 22 is a table that stores multiple flows. The flow table 22 may store information on flows of multiple patterns that the server 1 would relay before starting the operation of the server 1. The flow may mean a set (combination) of a header field of a packet in which a condition for identifying the packet is set and an action (operation) to be applied to the packet. The Action may include types such as forwarding (Forward) that transmits the packet from specified virtual ports 41 and 42, modifying (Modify) that rewrites the packet header, dropping (Drop) that discards the packet, and the like.

The flow cache 23 is a cache used for speeding up the relaying process, and temporarily holds information of the flow that has been input most recently from the packet relay unit 21, for example.

The determining unit 24 determines whether or not a flow registered in the flow cache 23 by the packet relay unit 21 matches a condition (copying condition) of memory copying, which is an example of the given condition. In cases where the flow matches the copying condition, the determining unit 24 registers the copying condition into the monitoring and copying unit 5 so that the memory copying can be performed by the monitoring and copying unit 5 on the same packet transmitted the next and subsequent times. Further, the determining unit 24 rewrites the operation of the flow registered in the forwarding information storing unit 6 to discarding (Drop) so that the communication device 4 does not redundantly transmit the packet processed by the monitoring and copying unit 5 (i.e., subjected to the memory copying).

The virtual switch 20 may have a function similar to that of the controlling unit 214 illustrated in FIG. 2. In the example of FIG. 4, the illustration of the configuration corresponding to the controlling unit 214 is omitted.

As illustrated in FIG. 4, the VM memory 30 serving as a storing region on the packet-transmitting side may include a transmission buffer 31 and a transmission queue 33, and the VM memory 30 serving as a storing region on the packet-receiving side may include a reception buffer 32, a reception queue 34 for memory copy, and a reception queue 35.

As illustrated in FIG. 4, the VM memory 30 may be connected to a virtual port of the communication device 4. The transmission queue 33 and the reception queue 35 may be associated with the virtual ports 41 and 42 of the communication device 4, respectively. The reception queue 34 for memory copying is a reception queue for memory copying performed by the monitoring and copying unit 5.

For convenience, the example of FIG. 4 assumes that that the VM memory #0 includes the transmission buffer 31 and the transmission queue 33 to serve as the transmitting side, and the VM memory #1 includes the reception buffer 32, the reception queue 34 for memory copying, and the reception queue 35 to serve as the receiving side. Incidentally, the VM memory 30 may have both storing regions of the transmitting side and the receiving side.

The communication device 4 may, by way of example, include the virtual ports 41 and 42, the packet relay unit 43, the exception ports 44 and 45, and a physical port 46.

The virtual ports 41 and 42 are virtual ports being respectively connected to the VM #0 and VM #1 that the processor 2 executes, using the VM memory 30, and being used to communicate with the VMs. In the example of FIG. 3, the virtual port 41 connected to the VM #0 executed by the processor 2 is referred to as a virtual port #0, and the virtual port 42 connected to the VM #1 executed by the processor 2 is referred to as a virtual port #1.

The virtual port 41 may perform control on the transmitting-side VM #0. For example, the virtual port 41 may monitor the transmission queue 33 of the VM memory #0 and confirm a difference between an available index and the available index that the virtual port 41 holds.

An available index is an index that indicates that a packet has been set in the transmission buffer 31 and may be referred to as an avail_idx. An available index may be managed independently of one another in each VM memory 30, an index updating unit 53, and each of virtual port 41 and 42, respectively.

Then, the virtual port 41 may read a number of packets as many packets as the difference from the transmission buffer 31 and may output the read packets to the packet relay unit 43. Further, when a transmitting process in the communication device 4 is completed, the virtual port 41 may notify the index updating unit 53 of the completion of the transmitting process by updating (e.g., incrementing) a process-completion index held by the index updating unit 53 of the monitoring and copying unit 5.

The process-completion index is an index that notifies that a buffer indicated by the available index has been used and may be referred to as a used_idx. The process-completion index is an example of information indicating the number of pieces of data being to be transmitted and being stored.

The virtual port 42 may perform control on the receiving-side VM #1. For example, the virtual port 42 may obtain a packet (data) addressed to the VM #1 from the packet relay unit 43, and write the obtained packet into the reception buffer 32 of the destination VM #1. Then, the virtual port 42 may notify the destination VM #1 of the reception of the packets by updating (e.g., incrementing) a process-completion index of the reception queue 35 by the number of packets written into the reception buffer 32 (e.g., incrementing).

The exception port 44 may transmit a packet, which output from the packet relay unit 43 to the virtual switch 20, to the packet relay unit 21 of the virtual switch 20. The exception port 45 may receive the packet output from the packet relay unit 21 and output the received packet to the packet relay unit 43. The exception ports 44 and 45 may independently of each other be virtual ports, for example.

The physical port 46 is one that is connected to an external interface (I/F) for communicating with an external NW (Network) or an external device disposed outside the server 1.

The virtual ports 41 and 42, the exception ports 44 and 45, and the physical port 46 may have port IDs (PID: Port Identifier) unique to each port. A PID may be unique among the virtual ports 41 and 42, the exception ports 44 and 45, and the physical port 46 in one or more communication devices 4 provided in the server 1. For example, even when the server 1 includes two or more communication devices 4, setting a PID such that, for example, several higher-order bits thereof indicate the ID of a communication device 4 and the several lower-order bits indicate the ID of the port in the communication device 4 makes it possible to identify the input port and the output port with reference to the PID.

The packet relay unit 43 performs a relaying process on an input packet and outputs the packet to a destination port. For example, the packet relay unit 43 may include a retrieving unit 43a, an operation applying unit 43b, and a cross-bar switch 43c.

The retrieving unit 43a performs retrieval from the forwarding information storing unit 6, using packet information input via any one of the virtual ports 41 and 42 and the physical port 46, and outputs an operation (Action) obtained as a result of the retrieval to the operation applying unit 43b along with the input packet. For packet information input via the exception port 45, the retrieving unit 43a may skip the retrieval from the forwarding information storing unit 6 and output the packet to the operation applying unit 43b or the cross-bar switch 43c.

The operation applying unit 43b may apply the operation input from the retrieving unit 43a to the packet input from the retrieving unit 43a, and output the packet having been subjected to the operation application to the cross-bar switch 43c. The "operation" may include, for example, determining of a destination port, rewriting of a header, and discarding of a packet.

The cross-bar switch 43c may output the packet having been subjected to the operation application to the specified (addressed) destination port exemplified by any one of the virtual ports 41 and 42 and the physical port 46. Further, the cross-bar switch 43c may transmit a packet from the exception port 44 to the packet relay unit 21 of the virtual switch 20 in order to register a flow of the packet missed in the retrieval in the forwarding information storing unit 6 into the forwarding information storing unit 6.

The monitoring and copying unit 5 is a module that performs monitoring and memory copying of a packet, and may include, for example, a copying unit 52, an index updating unit 53, and a snooping unit 54 as illustrated in FIG. 4.

The copying unit 52 may copy a packet determined to satisfy the condition for memory copying in the snooping unit 54 from the transmission buffer 31 of a source (sender) VM to the reception buffer 32 of the destination VM. Further, the copying unit 52 may notify the destination VM of the reception of the packet by setting the reception queue 34 for memory copying as many as the number of (the same in number as) copied packets to "being used".

The index updating unit 53 may monitor the transmission queue 33 of the source VM and confirm the available index. For example, the index updating unit 53 may obtain a difference between the available index of the transmission queue 33 and the available index held by the index updating unit 53 and check whether or not there is a new transmission.

Further, in the one embodiment, since the communication device 4 and the monitoring and copying unit 5 access the transmission queue 33 in parallel to each other to perform a transmitting process for a packet, the index updating unit 53 may notify the source VM of the completion of the processing by waiting for the completion of the transmitting process of the communication device 4 and the completion of the memory copying process and updating (for example, incrementing) the process-completion index of the transmission queue 33 to a position where both processes are completed.

When the index updating unit 53 detects a new transmission from a VM, the snooping unit 54 refers to (snoops) the used transmission buffer 31 one by one from the transmission queue 33 and determines whether or not the packet satisfies the condition for memory copying.

As described above, the index updating unit 53 and the snooping unit 54 are examples of the monitoring unit 51 illustrated in FIG. 3.

The forwarding information storing unit 6 may be a storing region in which a flow referred to for determining an action from an input packet by the packet relay unit 43 is stored.

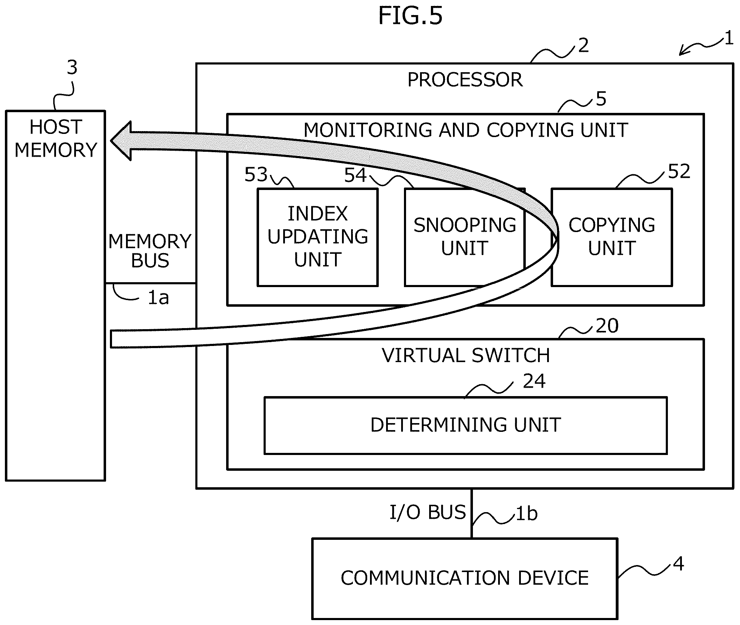

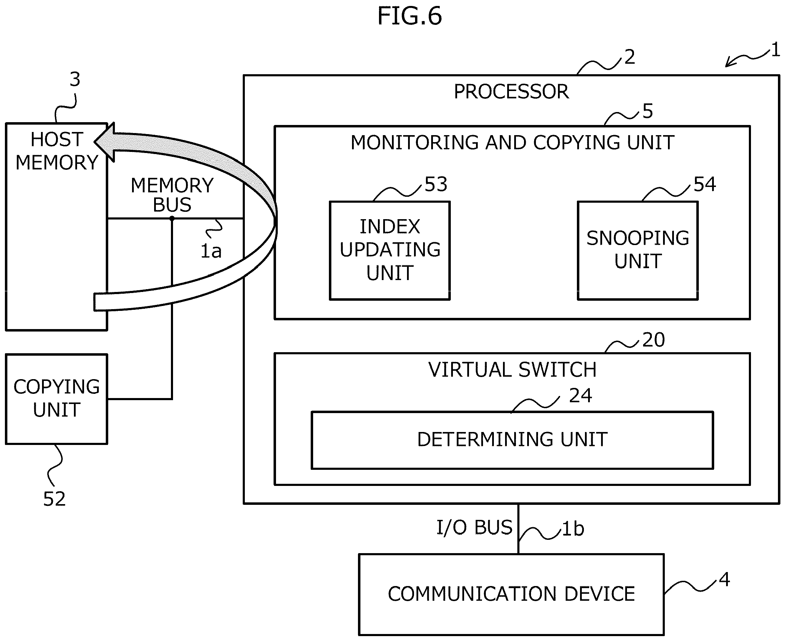

FIGs. 5 and 6 are diagrams illustrating examples of connecting the processor 2 that executes a virtual switch 20, the host memory 3, and the communication device 4 to one another.

As illustrated in FIGS. 5 and 6, the processor 2 and the host memory 3 may be communicably connected to each other via a memory bus 1a. The processor 2 and the communication device 4 may be communicably connected to each other via an I/O bus 1b. The I/O bus 1b is an example of an input/output bus.

In the first example illustrated in FIG. 5, the monitoring and copying unit 5 may be implemented in the server 1, serving as one of the functions of the processor 2. In other words, the processor 2 may include a monitoring and copying unit 5 including the copying unit 52, the index updating unit 53, and the snooping unit 54. In this case, the monitoring and copying unit 5 may be implemented as software executed by the processor 2 or may be implemented as a hardware function in the processor 2. In the example of FIG. 5, the monitoring and copying unit 5 may communicate with the host memory 3 via a memory controller (not illustrated) provided in the processor 2 (or the server 1) and the memory bus 1a. The monitoring and copying unit 5 may communicate with the communication device 4 through the I/O bus controller (not illustrated) provided in the processor 2 (or the server 1) and the I/O bus 1b.

In the second example illustrated in FIG. 6, the index updating unit 53 and the snooping unit 54 of the monitoring and copying unit 5 may be implemented in the server 1 as one function of the processor 2. In other words, the processor 2 may include the monitoring and copying unit 5 including the index updating unit 53 and the snooping unit 54. In this case, the monitoring and copying unit 5 may be implemented as software executed by the processor 2 or may be implemented as a hardware function in the processor 2. In addition, the copying unit 52 (transfer processor) in the monitoring and copying unit 5 may be implemented in the server 1, serving as a device being independent of the processor 2 and the communication device 4 and being exemplified by a DMA device capable of forwarding data with the host memory 3.

In the example of FIG. 6, the index updating unit 53 may count the number of issued copying instructions and the number of completed copies in a completion determining process of the memory copying.

### (1-3) Example of Operation of Server:

Next, an operation example of the server 1 illustrated in FIG. 4 will now be described.

### (1-3-1) Initializing Process:

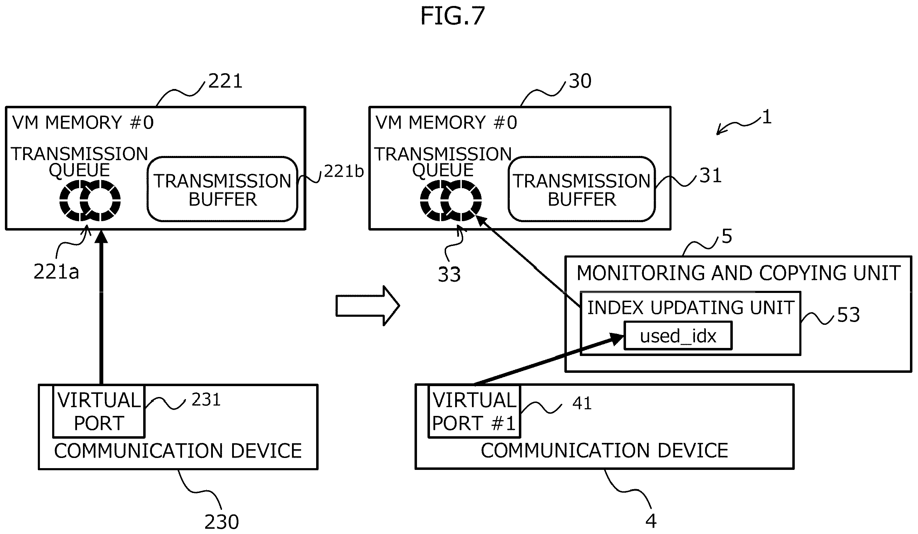

First, description will now be made in relation to an example of operation of an initializing process. FIG. 7 is a diagram illustrating an example of the operation of the initializing process performed in the server 1.

As exemplified on the left side of FIG. 7, the existing communication device 230 (see FIG. 2) notifies the source VM corresponding to the virtual port 231 of the completion of transmission by the communication device 230 updating the process-completion index of the transmission queue 221a to the VM memory 221 of the source VM.

On the other hand, as illustrated on the right side of FIG. 7, in order to prevent the communication device 4 from notifying the source VM of the completion of the transmission before the completion of the memory copying process by the monitoring and copying unit 5 or vice versa, the server 1 of the one embodiment waits for the completion of the both processes.

In order to wait for the completions, for example, the server 1 may perform an initializing process on the monitoring and copying unit 5 when the VM establishes a connection with the virtual port 41 or 42 of the communication device 4, so that the setting of the communication device 4 may be changed.

For example, in the communication device 4, the address of the process-completion index updated by the communication device 4 may be changed from the address of the process-completion index of the transmission queue 33 of the VM memory 30 to the address of the process-completion index of the index updating unit 53 of the monitoring and copying unit 5. In the example of FIG. 7, the process-completion index of the index updating unit 53 is denoted as "used_idx."

Further, in the monitoring and copying unit 5, the address of the transmission queue 33 of the source VM may be set to the index updating unit 53. This makes the index updating unit 53 possible to notify the source VM of the completion of the transmission after the waiting in the monitoring and copying unit 5.

The initializing process may be performed, for example, by an administrator or a user of the server 1, or may be performed by one or more of the processor 2, the communication device 4, and the monitoring and copying unit 5.

### (1-3-2) Flow Registering Process:

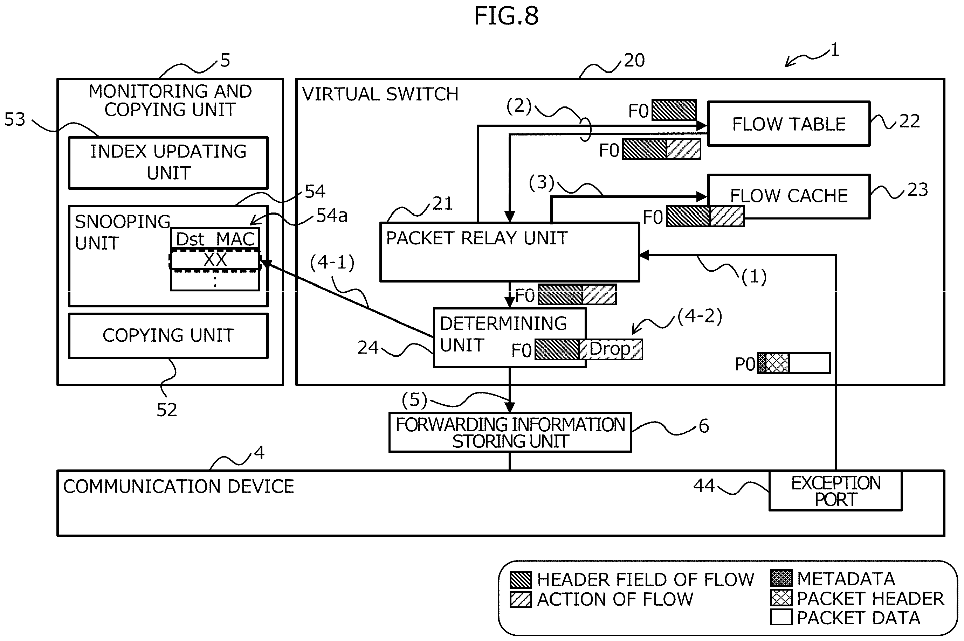

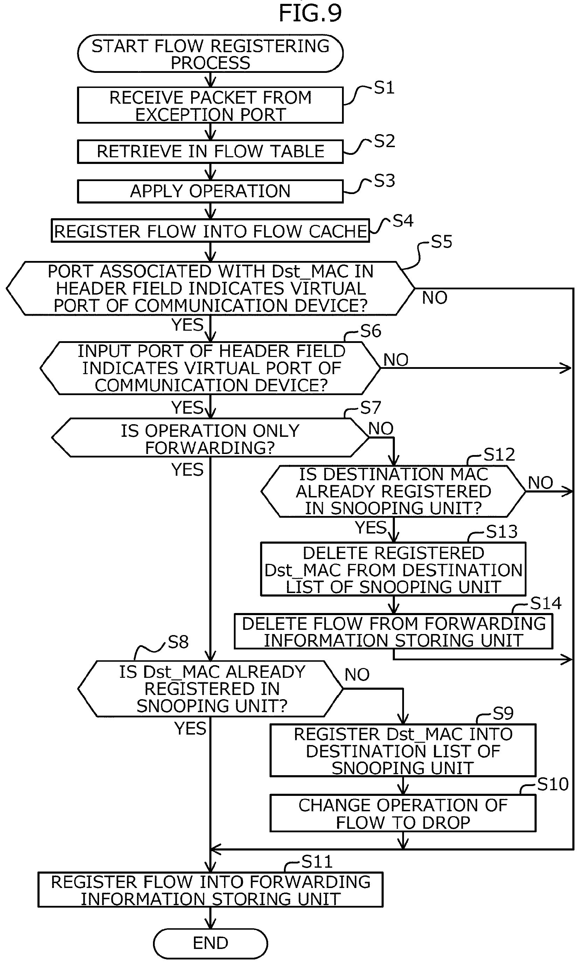

Next, description will now be made in relation to an example of operation of a flow registering process. FIG. 8 is a diagram illustrating an example of the operation of the flow registering process in the server 1, and FIG. 9 is a flow diagram illustrating an example of the operation of the flow registering process in the server 1.

The following description assumes a case where a flow of the packet P0 received at the virtual port 41 (not illustrated) of the communication device 4 is not present in the forwarding information storing unit 6. As an example, after the server 1 is started (e.g., started for the first time) or is initialized, information of a flow is sometimes not present in the forwarding information storing unit 6 (and the flow cache 23). In such a case, the communication device 4 inquires the virtual switch 20 about operation of packets (in other words, all the packets received for the first time) the flows of which are not present in the forwarding information storing unit 6, and the flow registering process is executed in the virtual switch 20 and the monitoring and copying unit 5 for each packet.

As illustrated in FIG. 8, from the exception port 44 of the communication device 4, a packet P0 corresponding to a flow F0 not being registered in the forwarding information storing unit 6 is transmitted to the packet relay unit 21 of the virtual switch 20 (see Arrow (1)). The packet relay unit 21 receives the packet P0 from the exception port 44 (Step S1 in FIG. 9).

The packet relay unit 21 retrieves a flow in the flow table 22 on the basis of the header field of the received packet P0, and obtains the flow F0 including the header field and the operation (see Arrow (2); Step S2 in FIG. 9). The packet relay unit 21 applies the operation of the obtained flow F0 to the packet P0 (Step S3 in FIG. 9).

The packet relay unit 21, for speeding up the process, registers the information of the flow F0 into the flow cache 23 (see Arrow (3); Step S4 in FIG. 9).

The determining unit 24 determines whether or not to snoop the flow F0.

For example, the determining unit 24 determines whether a port associated with the destination MAC (Dst_MAC) address of the header field of the flow F0 indicates the virtual port of the communication device 4 (Step S5 in FIG. 9).

In cases where the port associated with the destination MAC (Dst_MAC) address indicates the virtual port of the communication device 4 (YES in Step S5 of FIG. 9), the determining unit 24 determines whether the input port (Ingress port) of the header field of the flow F0 indicates the virtual port of the communication device 4 (Step S6 of FIG. 9).

In cases where the input port (Ingress port) indicates the virtual port of the communication device 4 (YES in Step S6 in FIG. 9), the determining unit 24 determines whether the operation of the flow F0 indicates only forwarding (Forward) (Step S7 in FIG. 9).

In cases where the operation of the flow F0 indicates the (only) forwarding (YES in Step S7 of FIG. 9), the determining unit 24 determines to snoop the flow F0.

When determining to snoop the flow F0, the determining unit 24 determines whether or not information indicating the flow F0, for example, a destination MAC address included in the flow F0, is already registered in the snooping unit 54 (Step S8 in FIG. 9).

In cases where the destination MAC address is not registered in the snooping unit 54 (NO in Step S8 in FIG. 9), the determining unit 24 registers the destination MAC address into a snooping list 54a of the snooping unit 54 (see Arrow (4-1); Step S9 in FIG. 9). FIG. 8 illustrates an example in which the determining unit 24 registers "XX" as the destination MAC address of the flow F0 into the snooping list 54a.

The snooping list 54a is, for example, information that stores a list of information that can identify flows to be snooped, and may store, for example, a list of destination MAC addresses. The snooping list 54a may store the destination MAC addresses themselves, or may be information that can identify the destination MAC addresses, such as, hash values of the destination MAC addresses.

In addition, the determining unit 24 changes the operation of the flow F0 to Drop (see Arrow (4-2); Step S10 in FIG. 9).

The determining unit 24 registers the flow F0 the operation of which has been changed into the forwarding information storing unit 6 (see Arrow (5); Step S11 in FIG. 9), and the process ends. The packet relay unit 21 may output the packet P0 to the exception port 45 of the communication device 4, which is however omitted in FIG. 8.

In cases where the destination MAC address is registered in the snooping unit 54 in Step S8 of FIG. 9 (YES in Step S8 of FIG. 9), the determining unit 24 may skip the processing of Steps S9 and S10 and register the flow F0 into the forwarding information storing unit 6 (Step S11 of FIG. 9).

When determining not to snoop the flow F0, the determining unit 24 may operate as follows.

For example, in cases where a port or input port associated with the destination MAC address of the header field does not indicate the virtual port of the communication device 4 (NO in Step S5 or NO in Step S6 in FIG. 9), the process proceeds to Step S11 of FIG. 9. That is, the determining unit 24 may register the flow F0 obtained from the flow table 22 into the forwarding information storing unit 6 (Step S11 of FIG. 9).

When the operation of the flow F0 does not indicate (only) forwarding (NO in Step S7 of FIG. 9), the determining unit 24 determines whether the destination MAC address is already registered in the snooping unit 54 (Step S12 of FIG. 9). If the destination MAC address is not registered in the snooping unit 54 (NO in Step S12 of FIG. 9), the process proceeds to Step S11 of FIG. 9. That is, the determining unit 24 may register the flow F0 obtained from the flow table 22 into the forwarding information storing unit 6 (Step S11 of FIG. 9) .

In cases where the destination MAC address is registered in the snooping unit 54 (YES in Step S12 in FIG. 9), the determining unit 24 deletes the registered destination MAC address corresponding to the flow F0 from the snooping list 54a of the snooping unit 54 (Step S13 in FIG. 9). Then, the determining unit 24 deletes the flow F0 from the communication device 4 (Step S14 of FIG. 9), and the process proceeds to Step S11 of FIG. 9. That is, the determining unit 24 may register the flow F0 obtained from the flow table 22 into the forwarding information storing unit 6 (Step S11 of FIG. 9).

### (1-3-3) Memory Copying Process:

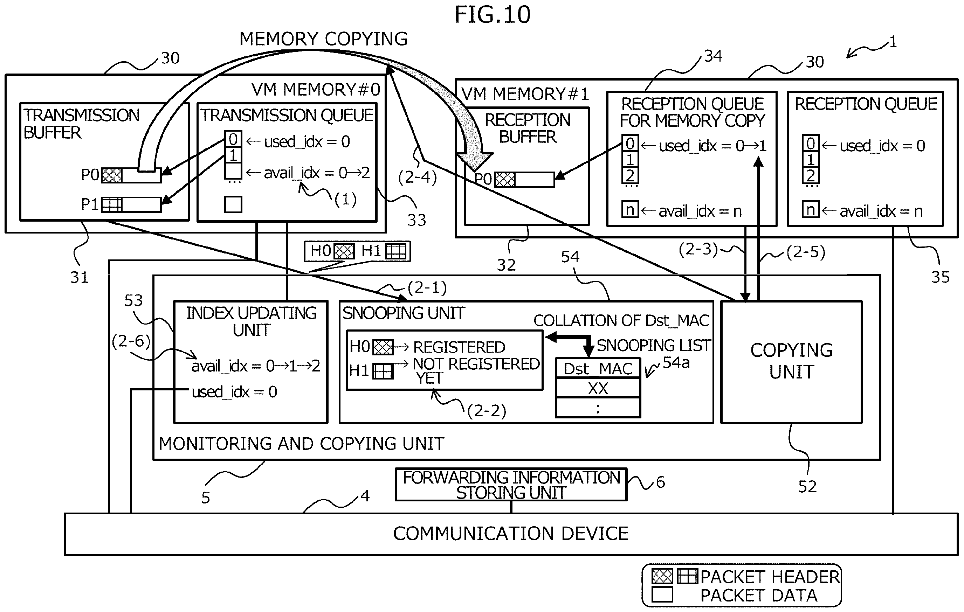

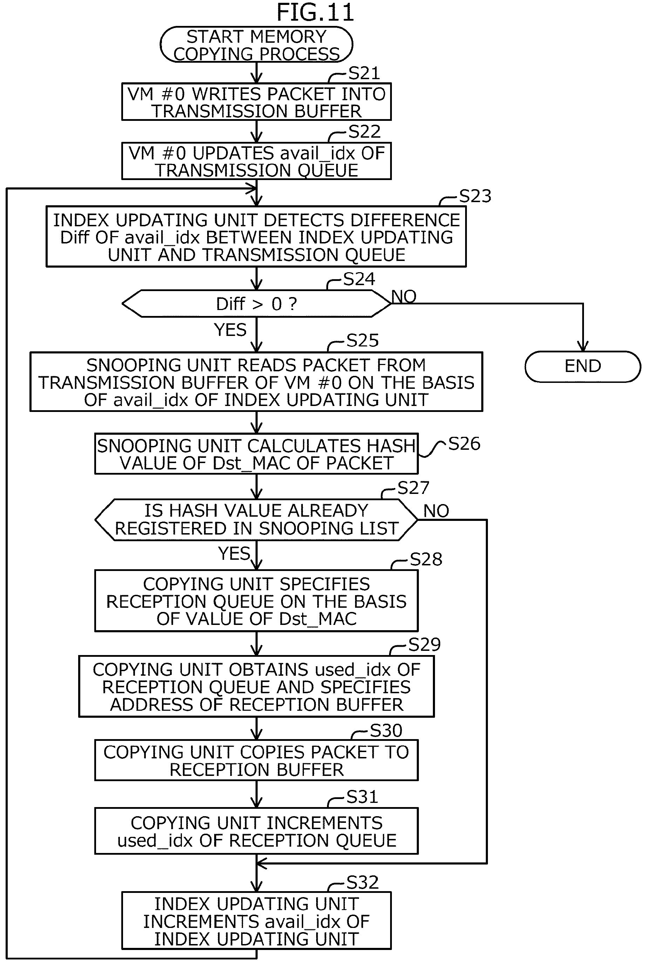

Next, description will now be made in relation to an example of operation of a memory copying process. FIG. 10 is a diagram illustrating an example of the operation of the memory copying process in the server 1, and FIG. 11 is a flow diagram illustrating an example of the operation of the memory copying process in the server 1. The memory copying process may be performed in parallel with a forwarding process performed by the communication device 4.

As illustrated in FIG. 10, the source VM writes packets into the transmission buffer 31 of the VM memory #0 (Step S21 of FIG. 11) and updates the available index (avail_idx) of the transmission queue 33 (see Arrow (1)); Step S22 of FIG. 11). For example, the source VM may count up the avail_idx by the number of the packets set in the transmission buffer 31.

The index updating unit 53 of the monitoring and copying unit 5 detects the difference Diff between the avail_idx held by the index updating unit 53 and the avail_idx of the transmission queue 33 (Step S23 of FIG. 11).

In a cases where the difference Diff is larger than "0" (Steps S24 and YES in S24 of FIG. 11), the monitoring and copying unit 5 may repeatedly execute the processes of Arrows (2-1) to (2-6) of FIG. 10 the number of times the same as the number of the difference Diff.

The snooping unit 54 reads one packet from the transmission buffer 31 on the basis of the avail_idx of the index updating unit 53 (see the Arrow (2-1); Step S25 of FIG. 11). At this time, the snooping unit 54 may read the header portion of the packet. The example of FIG. 10 assumes that the snooping unit 54 reads (the header portion of) the packet P0.

The snooping unit 54 calculates the hash value of the destination MAC of the header portion of the read packet (Step S26 of FIG. 11) and checks the calculated hash value with the snooping list 54a (see Arrow (2-2)).

In cases where the calculated hash value is already registered in the snooping list 54a (Step S27 and YES in Step S27 in FIG. 11), the copying unit 52 specifies the reception queue 34 for memory copying of the VM #1 directed by the destination MAC on the basis of the value of the destination MAC (Step S28 in FIG. 11). The copying unit 52 obtains the used_idx of the reception queue 34 for memory copying and obtains the address of the reception buffer 32 directed by the used_idx (see the Arrow (2-3); Step S29 of FIG. 11).

The copying unit 52 memory-copies the packet from the transmission buffer 31 to the address of the reception buffer 32 (see Arrow (2-4); Step S30 of FIG. 11).

The copying unit 52 updates, for example, increments, the used_idx of the reception queue 34 for memory copying (see the Arrow (2-5); Step S31 of FIG. 11).

The index updating unit 53 updates, for example, increments, the avail_idx held by the index updating unit 53 (see Arrow (2-6); Step S32 in FIG. 11). Then, the process proceeds to Step S23 in FIG. 11. In other words, the monitoring and copying unit 5 calculates the difference Diff based on the avail_idx after being updated, and if the difference Diff is larger than "0", performs the process of Arrows (2-1) to (2-6) in FIG. 10 on the next packet.

For example, it is assumed that the snooping unit 54 reads (the header portion of) the packet P1 in the processing of the Arrow (2-1) in the next iteration after the processing on the packet P0 is completed. In this case, since the hash value of the destination MAC of the header portion of the packet P1 is not registered in the snooping list 54a (NO in Step S27 of FIG. 11), the process proceeds to the process of Arrow (2-6) (Step S32 of FIG. 11). That is, the monitoring and copying unit 5 skips the memory copying, and the index updating unit 53 updates, for example, increments, the avail_idx held by the index updating unit 53.

In this case, the difference Diff based on the updated avail_idx becomes "0" (NO in Step S24), in other words, the avail_idx of the index updating unit 53 matches the avail_idx of the transmission queue 33. This completes the memory copying process.

### (1-3-4) Forwarding Process:

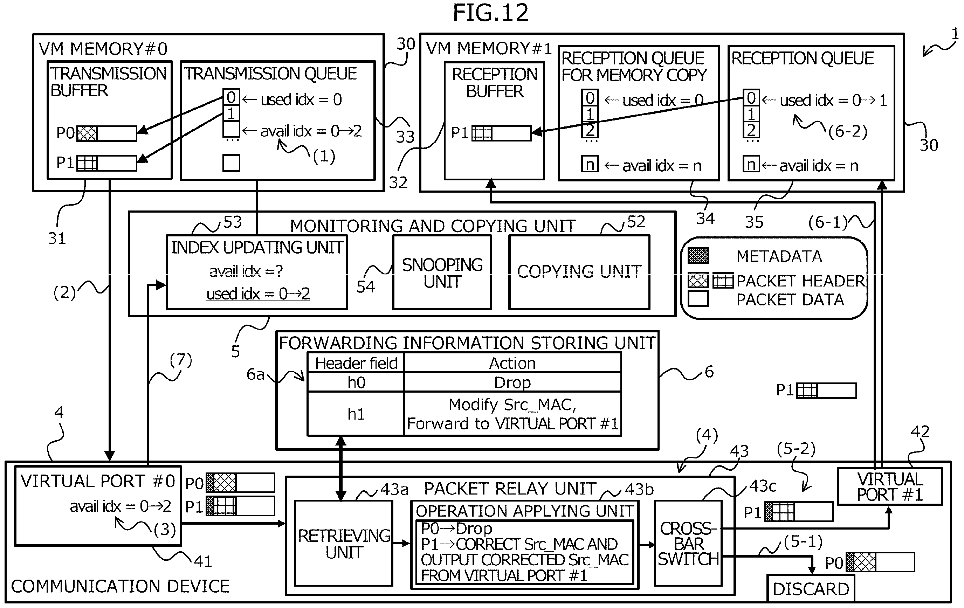

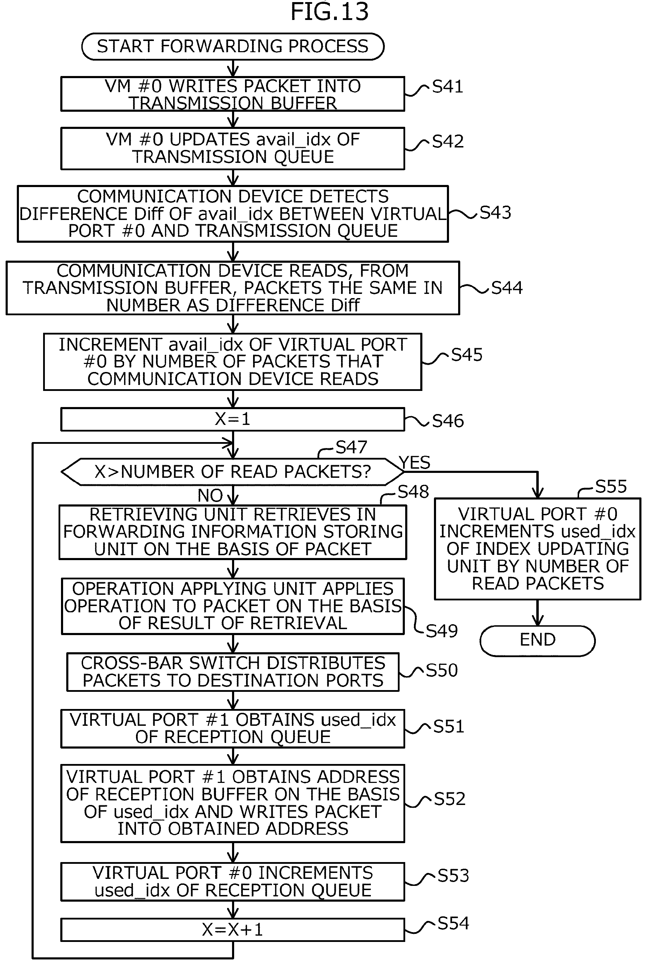

Next, description will now be made in relation to an example of operation of a forwarding process (relaying process). FIG. 12 is a diagram illustrating an example of the operation example of the forwarding process in the server 1, and FIG. 13 is a flow diagram illustrating an example of the operation of the forwarding process in the server 1. The forwarding process may be performed in parallel with the memory copying process performed by the monitoring and copying unit 5.

As illustrated in FIG. 12, the source VM writes packets into the transmission buffer 31 of the VM memory #0 (Step S41 of FIG. 13) and updates the available index (avail_idx) of the transmission queue 33 (see Arrow (1); Step S42 of FIG. 13). For example, the source VM may count up the avail_idx by the number of the packets set in the transmission buffer 31.

The virtual port 41 (virtual port #0) of the communication device 4 detects the difference Diff between the avail_idx that virtual port #0 holds and the avail_idx of the transmission queue 33 (Step S43 in FIG. 13).

The virtual port #0 reads, from the transmission buffer 31, the packets #0 and #1 the same in number as the difference Diff (see Arrow (2); Step S44 in FIG. 13), attaches the metadata to each read packet, and outputs the packets to the packet relay unit 43. Then, the virtual port #0 updates, for example, increments, the avail_idx of the virtual port #0 by the number of the read packets (see Arrow (3); Step S45 in FIG. 13). The metadata may illustratively include information such as the PID of in-port (input virtual port: virtual port #0 in the example of FIG. 12), the address of the transmission buffer 31, and the packet size of the transmitting packet in the transmission buffer 31, for example.

The communication device 4 may repeatedly perform the process of Arrows (4) to (6-2) of FIG. 12 the number of times the same as the number of read packets. FIG. 13 is described, for convenience, on the assumption that the communication device 4 sets the variable X to "1" (Step S46), and in cases where the variable X is equal to or less than the number of read packets (Step S47, NO in Step S47), carries out the process of the Arrows (4) to (6-2) in FIG. 12.

In the process of the Arrow (4), the retrieving unit 43a selects one of the input packets and retrieves a flow in the forwarding information storing unit 6 on the basis of the selected packet (Step S48 in FIG. 13). The operation applying unit 43b applies an operation to the packet on the basis of the result of the retrieval (Step S49 of FIG. 13).

In the example of FIG. 12, the retrieving unit 43a may obtain the operation (Action) of an entry that matches the header field of a forwarding information 6a stored in the forwarding information storing unit 6 on the basis of the header portion of the packet. The forwarding information 6a is an example of setting information in which the operation of the communication device 4 in the communication device 4 is set for each header of the data to be processed by the communication device 4. For example, the retrieving unit 43a obtains discarding (Drop) as an operation on the packet P0 and obtains correcting the source MAC address outputting the corrected address from the virtual port #1, as an operation of the packet P1.

The cross-bar switch 43c distributes the packets to the destination ports according to the respective applied operations (Step S50 in FIG. 13). For example, the cross-bar switch 43c discards the packet P0 according to the applied operation to the packet P0 (see Arrow (5-1)). Further, the cross-bar switch 43c outputs the packet P1 to the virtual port #1 according to the applied operation (see Arrow (5-2)).

Upon receipt of the packet P1, the virtual port #1 obtains the used_idx of the reception queue 35 of the VM memory #1 of the corresponding destination VM (Step S51 in FIG. 13). Further, the virtual port #1 obtains the address of the reception buffer 32 based on the used_idx, writes the packet P1 from which the metadata is excluded into the address (see Arrow (6-1); Step S52 in FIG. 13).

Further, the virtual port #1 updates, for example, increments, the used_idx of the reception queue 35 (see Arrow (6-2); Step S53 in FIG. 13).

The communication device 4 increments the variable X (Step S54), and the process proceeds to Step S47.

If the variable X exceeds the number of read packets (YES in Step S47), the virtual port #0 updates, for example, increments, the used_idx of the index updating unit 53 by the number of packets that have been read (see Arrow (7); Step S55 in FIG. 13), and the process ends.

This makes it possible to execute the waiting by the index updating unit 53 so that the source VM does not release the transmission buffer 31 of the VM memory #0 until the memory copying in the monitoring and copying unit 5 is completed.

The above-described packet forwarding process by the communication device 4 may be executed in the same manner as that performed by the communication device 230 illustrated in FIG. 2 except for the point that the completion of transmission is notified to the index updating unit 53 in the process of the Arrow (7) (Step S55 in FIG. 13), for example.

### (1-3-5) Waiting Process:

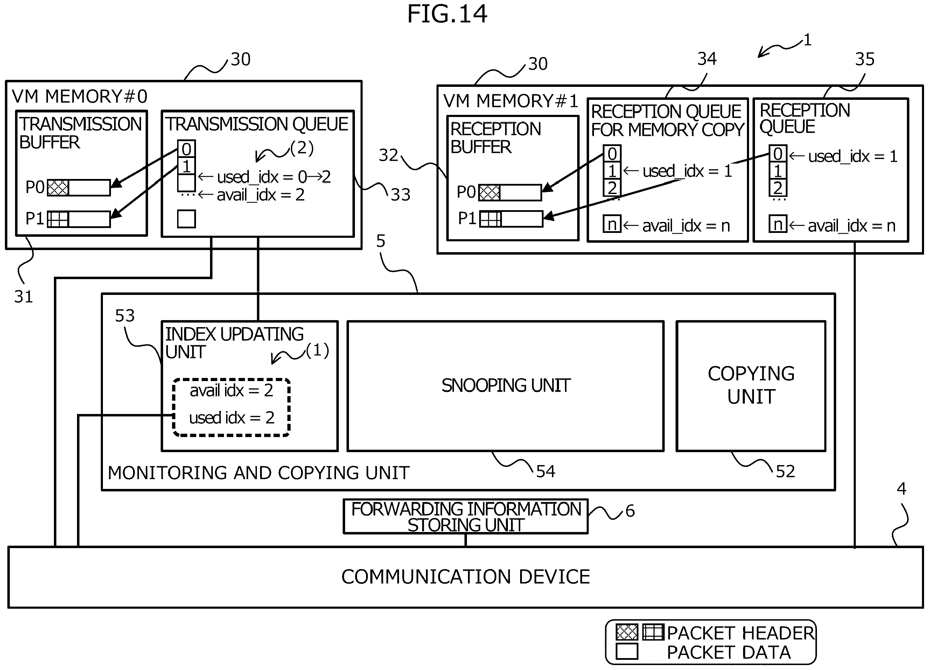

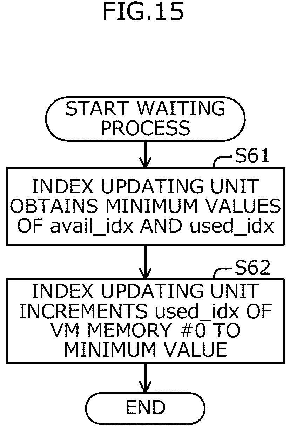

Next, description will now be made in relation to an example of operation of a waiting process. FIG. 14 is a diagram illustrating an example of the operation of the waiting process in the server 1, and FIG. 15 is a flow diagram illustrating an example of the operation of the waiting process in the server 1. The waiting process may be executed at various timings such as a timing after the completion of the memory copying process and the forwarding process, a subsequent periodic timing, and a timing triggered by a different incident from the memory copying process and the forwarding process.

As illustrated by the arrow (2-6) in FIG. 10, the value of the avail_idx of the index updating unit 53 indicates the number of packets (the number of process-completed packets) which have completed the processing.

As illustrated in the Arrow (7) of FIG. 12, the value of the used_idx of the index updating unit 53 indicates the number of packets (the number of process-completed packets) which have completed the forwarding process by the communication device 4.

Therefore, by obtaining the minimum (smaller) value among the avail_idx and the used_idx, the index updating unit 53 can obtain the number of packets which have completed both of the processing of the communication device 4 and the processing the monitoring and copying unit 5.

Therefore, the index updating unit 53 waits for completion of processing of the communication device 4 and processing of the monitoring and copying unit 5, and can, after the completion of the waiting, notify the VM memory 30 of the source VM of the completion.

For example, the index updating unit 53 obtains the minimum value among the avail_idx and the used_idx held by the index updating unit 53 (Step S61 of FIG. 15; see Arrow (1) of FIG. 14).

The index updating unit 53 updates, for example, increments, the used_idx of the transmission queue 33 of the transmission VM #0 until the used_idx comes to be the minimum value (Step S62 in FIG. 15; see Arrow (2) in FIG. 14), and the process ends.

As described above, if detecting the completion of forwarding by the copying unit 52 and the completion of discarding by the communication device 4 that are performed in data being to be processed and having a header satisfying the given condition, the index updating unit 53 sets information representing completion of transmission in the first VM memory 30.

### (1-4) Receiver VM#1

In the server 1 according to the one embodiment, as compared with the VM 222 (VM #1) of the server 200 illustrated in FIG. 2, the VM memory 30 (receiver VM #1) is provided with the reception queue 34 for memory copying in addition to the reception queue 35 used for receiving data from the communication device 4. Thus, in order to achieve the function of the server 1 according to the one embodiment, the configuration and processing of the VM memory 30 may be different from VM 222 (VM#1).

For example, one of the solution to prevent additional queues from being provided to the VM memory 30 may omit the reception queue 34 for memory copying and may receive data from the both communication device 4 and the monitoring and copying unit 5, using the reception queue 35.

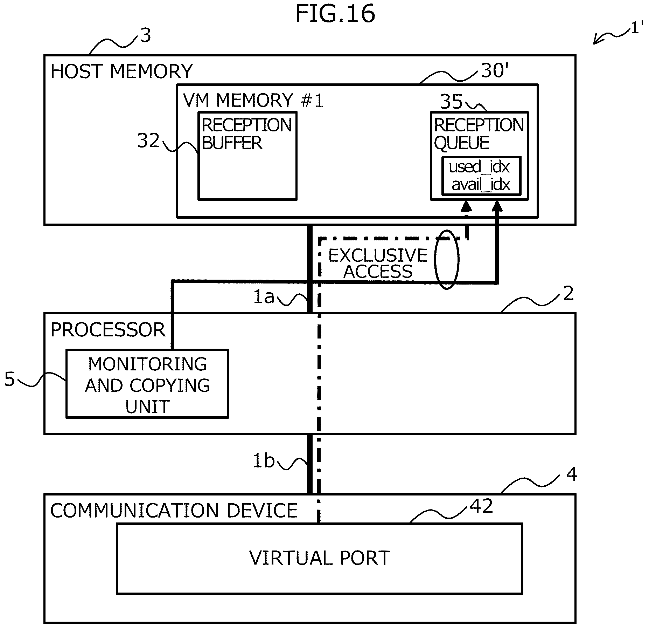

FIG. 16 is a diagram illustrating an example of a receiving process of data in a server 1' according to a comparative example. As illustrated in FIG. 16, the server 1' according to the comparative example provides a mechanism for allowing accesses (multi-access) from both the communication device 4 and the monitoring and copying unit 5 to one (one type) reception queue 35 of the VM memory 30' without providing the reception queue 34 for memory copying. This makes it possible to suppress the change to the VM (VM memory 30') and also makes it possible to accomplish both the relay of packets by the memory copying and the relay of packets by the communication device 4.

As illustrated in FIG. 16, the processor 2 and the communication device 4 may distribute (allocate) the elements (entries) of the reception queue 35 to the host memory 3 and make an exclusive access using a software-based lock variable or an atomic instruction.

However, a memory access from the communication device 4 through the I/O bus 1b and the memory bus 1a may have an overhead of several tens to hundreds of times larger than that of a memory access from the processor 2 through the memory bus 1a. To reduce this overhead, for example, the communication device 4 may read the indexes of the reception queue 35 in batches every several tens to hundreds of cycles, utilizing a memory access being a one-to-one access.

However, an exclusive access makes an access to a lock variable and an index in each individual cycle. Therefore, an exclusive access performed in offload becomes a bottleneck in performance.

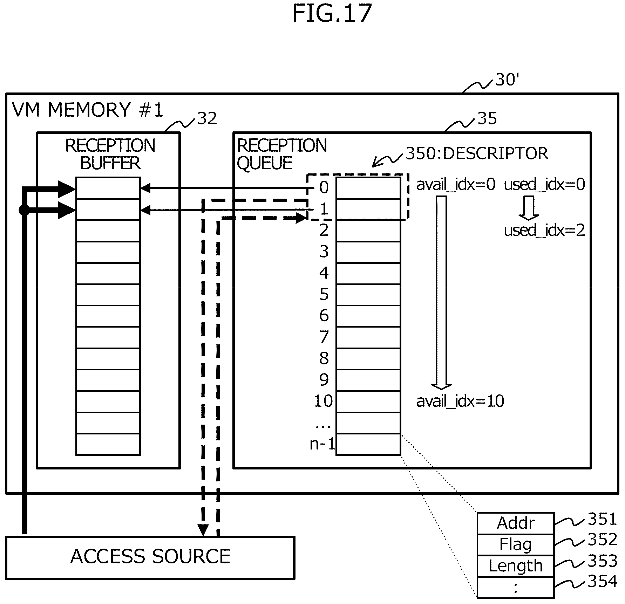

FIG. 17 is a diagram illustrating an example of a descriptor 350 of the reception queue 35. Here, the reception queue 222a of the VM 222 illustrated in FIG. 2 and the reception queue 35 of the VM memory 30 illustrated in FIG. 4 may also use descriptors having the same structures as those of the descriptors 350 illustrated in FIG. 17.

As illustrated in FIG. 17, the reception queue 35 may include multiple descriptors 350. The multiple descriptors 350 may correspond one to each of the entries of the reception buffer 32, for example, and may store information about the corresponding entries and data to be written into the entries. Each descriptor 350 may include items such as an address 351, a flag 352, a length 353, and other information 354. The address 351 may be a region to set an address of data to be forwarded exemplified by, for the reception queue 35, information indicating the address of an entry in the reception buffer 32 corresponding to the descriptor 350. The flag 352 may be a region to set information indicating a flag representing a type corresponding to a buffer corresponding to the descriptor 350 for reception or transmission, for example. The other information 354 may be, for example, at least one type of a region indicating information except for the address 351, the flag 352, and the length 353, a reserved region, and a non-used region.

In the example of FIG. 17, when a VM operating by using the VM memory 30' receives the data, the following processes (i) to (vi) may be performed.
(i) The VM allocates the reception buffer 32 to the access source exemplified by the processor 2 (monitoring and copying unit 5) or the communication device 4 (virtual port 42). In the example of FIG. 17, the VM may allocate the reception buffer 32 to the access source by incrementing the avail_idx from "0" to "10", in other words, by refilling the reception queue 35 with the descriptors 350. The VM may manage an avail_idx and a used_idx so that they can be referenced by the access source.
(ii) The access source fetches the descriptor 350 from the top of the reception queue 35 and obtains the address 351 of a writing destination. For example, the access source may refer to the descriptor 350 corresponding to the used_idx = "0".
(iii) The access source writes data into the reception buffer 32 indicated by the obtained address 351.
(iv) The access source sets the data length of the written data to the length 353 of the descriptor 350.
(v) The VM performs notification of the completion of receiving data from the access source. The notification may be made, for example, by incrementing the used_idx which can be referenced by the access source (i.e., "0" to "2" in the example of FIG. 17). The increment of the used_idx may be performed, for example, by an access source.
(vi) The VM reads the received data from the reception buffer 32. For example, the VM may refer to the two updated descriptors 350 from the difference between the current value "2" of the used_idx and the last value "0" of the used_idx, and read the data of the length 353 from the reception buffer 32 indicated by each address 351.

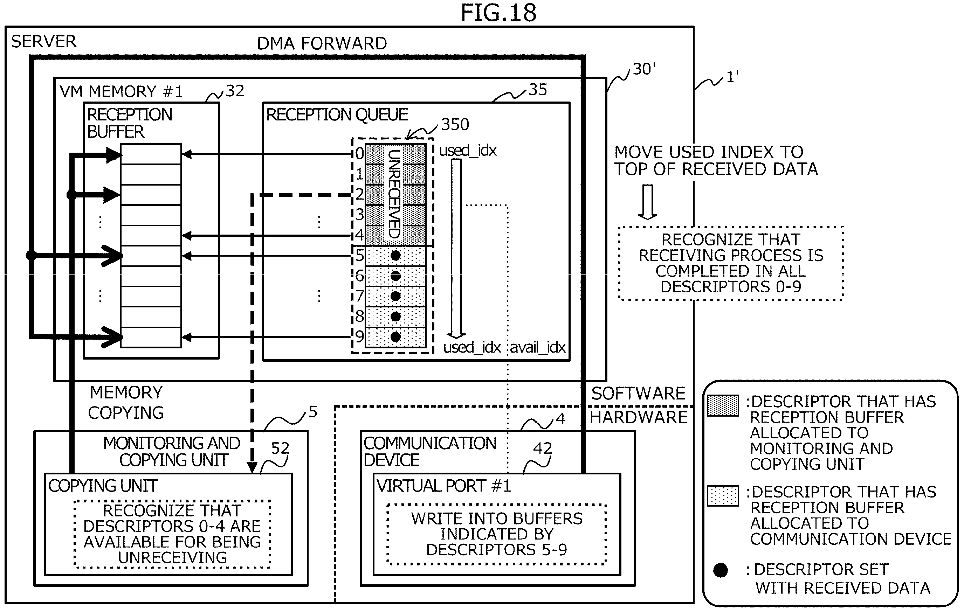

FIG. 18 is a diagram illustrating an example of distribution of entries (elements) of the reception queue 35. The VM may allocate the descriptor 350 refilled the reception queue 35 with to each access source, for example, the monitoring and copying unit 5 or the communication device 4. In the example of FIG. 18, the descriptors 350 (see the dark shaded region) of the indexes "0" to "4" are allocated to the monitoring and copying unit 5, and the descriptors 350 (see the light shaded region) of the indexes "5" to "9" are allocated to the communication device 4.

In the example of FIG. 18, the copying unit 52 of the monitoring and copying unit 5 has not received packets and recognizes that the descriptor 350 of "0" to "4" are available. On the other hand, the virtual port 42 of the communication device 4 recognizes that data has already be written into the reception buffer 32 indicated by the descriptors 350 having the indexes "5" to "9". As described above, FIG. 18 assumes that no data exists in the reception buffer 32 indicated by the former-half of the descriptors 350 of the reception queue 35 that the VM has refilled and data exists in the reception buffer 32 indicated by the latter-half of the descriptors 350.

In this case, when the communication device 4 updates the used_idx of the VM up to "9" which is the top of the received data, the VM completes the reception process to that point. In this case, even if the copy unit 52 writes the received data to the reception buffer 32 associated with the used_idx "0" to "4" that is recognized to be available, the VM recognizes that the processing on the entries "0" to "9" has been completed according to the values of the respective used_idx, so that the received data is not processed. Therefore, when the common reception queue 35 is allocated to multiple access sources, it may be desirable to modify the updating process on the index of the VM, in other words, to optimize the receiving process in the VM.

### (1-5) Description of Receiving Process of One Embodiment:

Hereinafter, description will now be made in relation to a server 1A in which the receiving process in the server 1 described above is optimized. The server 1A is one embodiment of the server 1, and is an exemplary mode in which the receiving process in the server 1 is optimized. The process, configuration, and functions of the server 1A not described below are the same as those of the server 1, and the repetitious description will be omitted.

For example, the server 1A can execute the same VM as the VM 222 (VM #1) illustrated in FIG. 2 due to the presence of a VM memory 30A including one set of a reception buffer and the reception queue serving as a storing region on the receiver side.

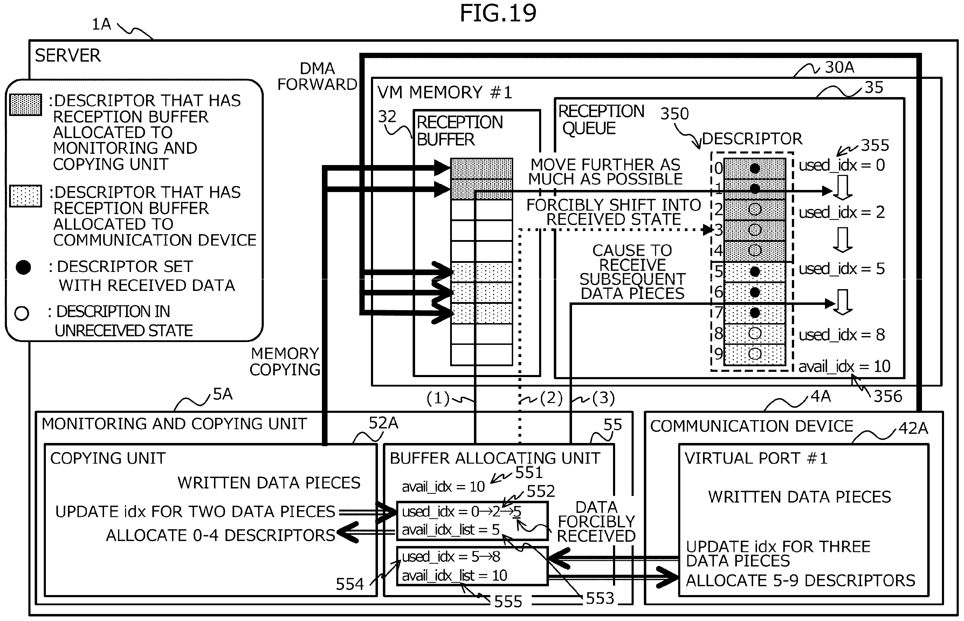

FIG. 19 is a diagram for briefly explaining the receiving process of the server 1A according to the embodiment.

As illustrated in FIG. 19, the reception queue 35 of the VM memory 30A may include descriptors 350, a processed index 355, and an available index 356. The processed index 355 is an example of an identification number set in the VM memory 30A, and may indicate an entry of data to be read from the reception buffer 32 by the VM. The available index 356 may indicate the end point of the available entries in the reception buffer 32. In the following description, the processed index 355 may be referred to as a "used_idx of the VM" or a "used_idx of the descriptor 350," and the available index 356 may be referred to as an "avail_idx of the VM" or an "avail_idx of the descriptor 350"

As illustrated in FIG. 19, the monitoring and copying unit 5A of the server 1A may further include a buffer allocating unit 55.

The buffer allocating unit 55 achieves multi-access to the reception queue 35 of the VM memory 30A while suppressing, for example, an exclusive access. For example, when the reception buffer 32 of the VM memory 30A is allocated by the receiver VM, the buffer allocating unit 55 distributes the allocated reception buffer 32 to the monitoring and copying unit 5A and the communication device 4A. The distribution by the buffer allocating unit 55 may include, for example, distributing the descriptors 350 that the VM refilled the reception queues 35 with to the monitoring and copying unit 5A and the communication device 4A.

The example of FIG. 19 assumes that, among the descriptors 350 of the reception queue 35, the indexes "0" to "4" are allocated to the monitoring and copying unit 5A, and indexes "5" to "9" are allocated to the communication device 4A.

Here, the buffer allocating unit 55 may attach, to each distributed descriptor 350, information (mark) that can distinguish whether the descriptor 350 is for the monitoring and copying unit 5A or for the communication device 4A. The information may be included in the other information 354 of the descriptor 350, for example, and may be set as a flag indicating that the corresponding descriptor 350 is for the monitoring and copying unit 5A or for the communication device 4A in the reserved region or the non-used region, for example.

The buffer allocating unit 55 has an index for managing the distributed descriptor 350 in the distribution of the reception buffer 32, and updates the index that the VM memory 30A holds. The index is an example of an identification number of each of the multiple entries included in the reception buffer 32.

The buffer allocating unit 55 may, for example, hold and manage an available index 551, a processed index 552 and an available index list 553 for the monitoring and copying unit 5A (copying unit 52A), and a processed index 554 and an available index list 555 for the communication device 4A.

The available index 551 may indicate an available index of the reception buffer 32 managed on the buffer allocating unit 55.

The processed index 552 is an example of the first used identification number corresponding to a used entry in multiple first entries allocated to the copying unit 52A among the identification numbers (indexes) one for each of the multiple entries included in the reception buffer 32. The processed index 552 may, for example, indicate an index of the starting point of the allocation of the reception buffer 32 allocated to the monitoring and copying unit 5A.

The available index list 553 may indicate an index of the end point of the allocation of the reception buffer 32 allocated to the monitoring and copying unit 5A, and may store the history of updating the index at the end point of the allocation in a list format.

The processed index 554 is an example of a second used identification number corresponding to a used entry in multiple second entries allocated to the communication device 4A among the identification numbers (indexes) of the multiple entries included in the reception buffer 32. The processed index 554 may, for example, indicate an index of the starting point of the allocation of the reception buffer 32 allocated to the communication device 4A.

The available index list 555 may indicate an index of the end point of the allocation of the reception buffer 32 allocated to the communication device 4A, and may store the history of updating the index at the end point of the allocation in a list format.

In the following description, the available index 551 is sometimes referred to as an "avail_idx of the buffer allocating unit 55." The processed index 552 and the available index list 553 is sometimes referred to as a "used_idx for the copying unit 52A" and an "avail_idx_list for the copying unit 52A", respectively. Further, the processed index 554 and the available index list 555 is sometimes referred to as a "used_idx for the communication device 4A" and an "avail_idx_list for the communication device 4A", respectively.

The buffer allocating unit 55 causes the monitoring and copying unit 5A and the communication device 4A to use the used_idx and the avail_idx_list for the copying unit 52A and the used_idx and the avail_idx_list for the communication device 4A, respectively, so that packets can be written to respective intended reception buffer 32.

In performing a memory copying, the copying unit 52A refers to the address of an entry of the destination reception buffer 32 (hereinafter, sometimes simply referred to as the "address of the reception buffer 32") from the descriptors 350 on the basis of the used_idx for the copying unit 52A. For example, the copying unit 52A performs memory copying when a flag included in the other information 354 indicates that the target reception buffer 32 is one for the monitoring and copying unit 5A, and refers to the following descriptor 350 when the flag indicates that the reception buffer 32 is one for the communication device 4A. After the memory copying, the copying unit 52A increments the used_idx for the copying unit 52A and notifies the buffer allocating unit 55 of the completion of the copying.

In writing data to the VM memory 30A, the virtual port 42A refers to the address of the destination reception buffer 32 from the descriptor 350 based on the used_idx for the communication device 4A. For example, the virtual port 42A performs data writing when a flag included in the other information 354 indicates that the target reception buffer 32 is one for the communication device 4A, and refers to the following descriptor 350 when the flag indicates that the reception buffer 32 is one for the monitoring and copying unit 5A. After the writing, the virtual port 42A increments the used_idx for the buffer allocating unit 55 and notifies the buffer allocating unit 55 of the completion of the copying.

The buffer allocating unit 55 determines the usage status of the reception buffer 32 by each access source on the basis of the change (progress) of the value of each used_idx, and updates the used_idx of the receiver VM to a position where the receiver VM can execute the receiving process. Updating of the used_idx of the receiver VM is an example of a completion notification of reception to the receiver VM.

For example, as illustrated in FIG. 19, the monitoring and copying unit 5A (copying unit 52A) writes two pieces of data and updates the used_idx of the buffer allocating unit 55 from "0" to "2" (see Arrow (1)). The buffer allocating unit 55 updates the used_idx of the VM memory 30A in response to the updating of the used_idx by the copying unit 52A.

Further, the buffer allocating unit 55 periodically checks the difference between the starting point and the end point of the allocation of the reception buffer 32 for each of the monitoring and copying unit 5A and the communication device 4A, and thereby confirms the presence of an entry in the reception buffer 32 that is continuously in non-received state.

For example, when the buffer allocating unit 55 detects that the entries corresponding to the indexes of "2" to "4" have not received data for a predetermined period of time, the buffer allocating unit 55 encourages the VM to carry out the receiving process by forcibly changing the entry of the reception buffer 32 to received state, (see Arrow (2)). For example, the buffer allocating unit 55 sets the descriptors 350 of "2" to "5" with information indicating that dummy data is written, and writes dummy data to the reception buffer 32 of "2" to "4" that have not received data by updating the used_idx from "2" to "5", and to update the used_idx of the VM memory 30A. The dummy data may be data not accompanying, for example, an actual writing to the reception buffer 32, and is exemplified by data having a length of "0".

Further, in parallel (asynchronously) with the processing related to the monitoring and copying unit 5A, the communication device 4A (virtual port 42A) writes three data pieces and updates the used_idx from "5" to "8" (see Arrow (3)). The buffer allocating unit 55 updates the used_idx of the VM memory 30A in response to updating of the used_idx by the virtual port 42A.

As described above, the buffer allocating unit 55 manages the used_idx of the monitoring and copying unit 5A and the used_idx of the communication device 4A, which enables multi-access to the VM memory 30A by both the monitoring and copying unit 5A and the communication device 4A.

Further, the buffer allocating unit 55 forcibly shifts an entry of the reception buffer 32 that has not performed writing by the access source for a predetermined time which access source has at least an earlier order of allocating of an index into the received state. This encourages the VM to perform a receiving process from an entry of the reception buffer 32 indicated by the indexes of "0" to "8" and can release the entries of the same reception buffer 32 after the receiving process, so that the period in which the reception buffer 32 lacks can be shortened.

### (1-6) Example of Configuration of Server related to Receiving Process:

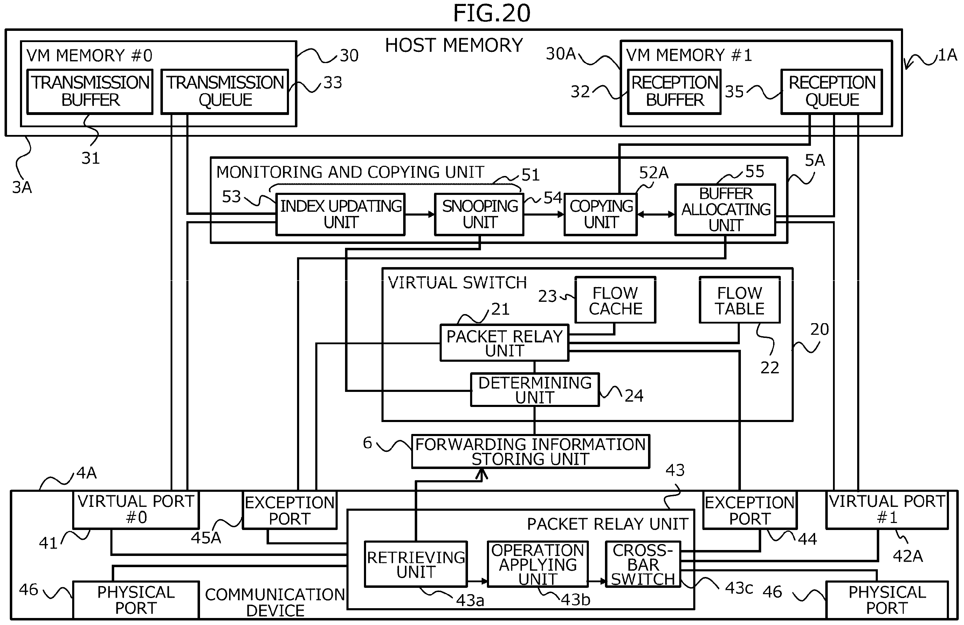

FIG. 20 is a block diagram illustrating an example of the configuration of the server 1A related to the receiving process. The server 1A is different in a process or a function of each of the virtual port 42A and the exception port 45A of the communication device 4A and the copying unit 52A of the monitoring and copying unit 5A from the server 1 illustrated in FIG. 4. The server 1A is different from the server 1 illustrated in FIG. 4 in that the reception queue 34 for memory copying is omitted from the VM memory 30A of the host memory 3A and that the monitoring and copying unit 5A includes the buffer allocating unit 55.

In the example of FIG. 20, the VM memory #1 of the receiver side is represented by a reference number 30A, and the VM memory #0 of the sender side is represented by a reference number 30, but the present invention is not limited to this. For example, the VM memory #0 may be a VM memory 30A omitting the reception queue 34 for memory copying serving as a queue on the receiver side.

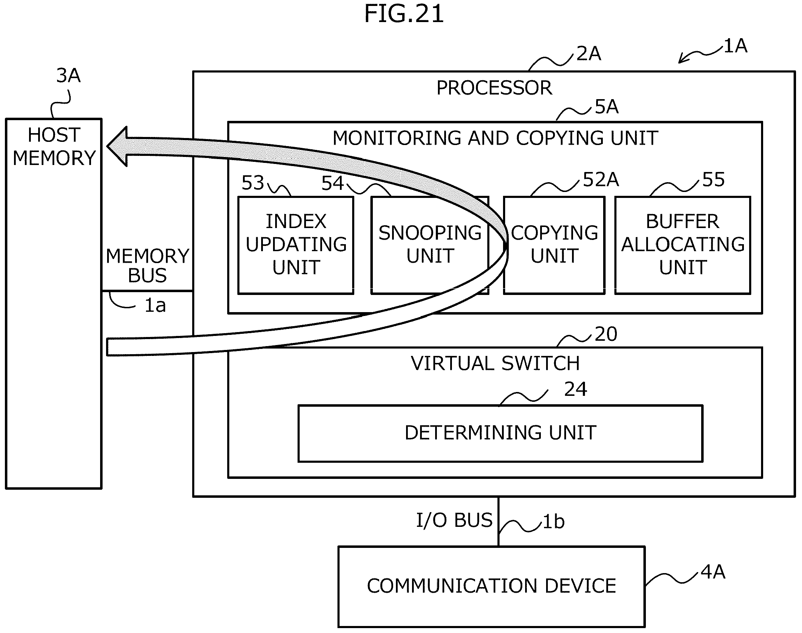

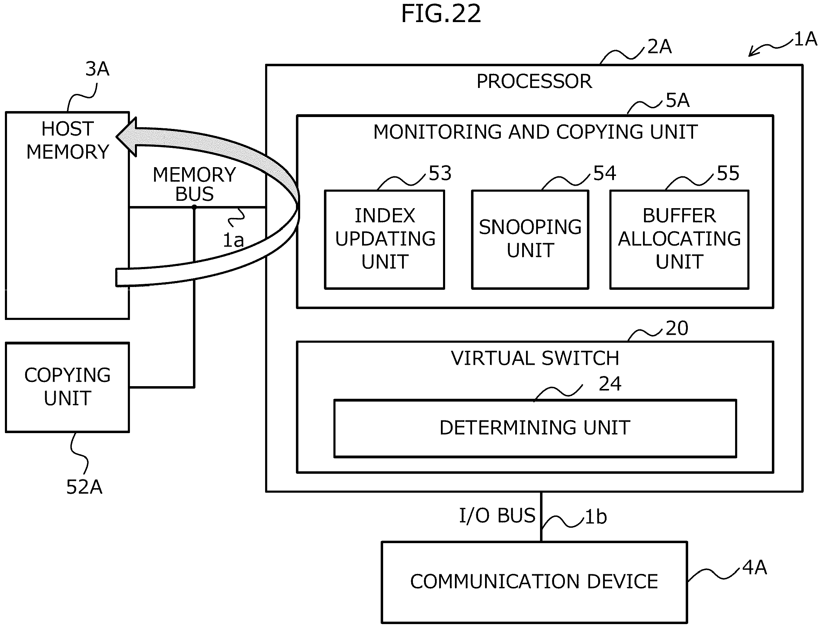

FIGS. 21 and 22 are diagrams illustrating examples of connections among a processor 2A that executes the virtual switch 20, a host memory 3A, and the communication device 4A.

FIG. 21 is a diagram that applies the processor 2A, the host memory 3A, and the communication device 4A to FIG. 5, and applies basically the same description as that of FIG. 5. In the first example illustrated in FIG. 21, the monitoring and copying unit 5A may be implemented in the server 1A as a function of the processor 2A. In other words, the processor 2A may include a monitoring and copying unit 5A including a copying unit 52A, an index updating unit 53, a snooping unit 54, and a buffer allocating unit 55. In this case, the monitoring and copying unit 5A may be implemented as software executed by the processor 2A or may be implemented as a hardware function in the processor 2A.

FIG. 22 is a diagram that applies the processor 2A, the host memory 3A, and the communication device 4A to FIG. 6, and applies basically the same description as that of FIG. 6. In the second example illustrated in FIG. 22, the index updating unit 53, the snooping unit 54, and the buffer allocating unit 55 of the monitoring and copying unit 5 may be implemented in the server 1A as one function of the processor 2A. In other words, the processor 2A may include a monitoring and copying unit 5A including an index updating unit 53, a snooping unit 54, and a buffer allocating unit 55. In this case, the monitoring and copying unit 5A may be implemented as software executed by the processor 2A or may be implemented as a hardware function in the processor 2A. In addition, the copying unit 52A in the monitoring and copying unit 5A may be implemented in the server 1A, serving as a device being independent of the processor 2A and the communication device 4A and being exemplified by a DMA device capable of forwarding data with the host memory 3A.

### (1-7) Examples of Operations Related to Receiving Process of Server:

Next, description will now be made in relation to operation of the server 1A illustrated in FIG. 20.

### (1-7-1) Initializing Process:

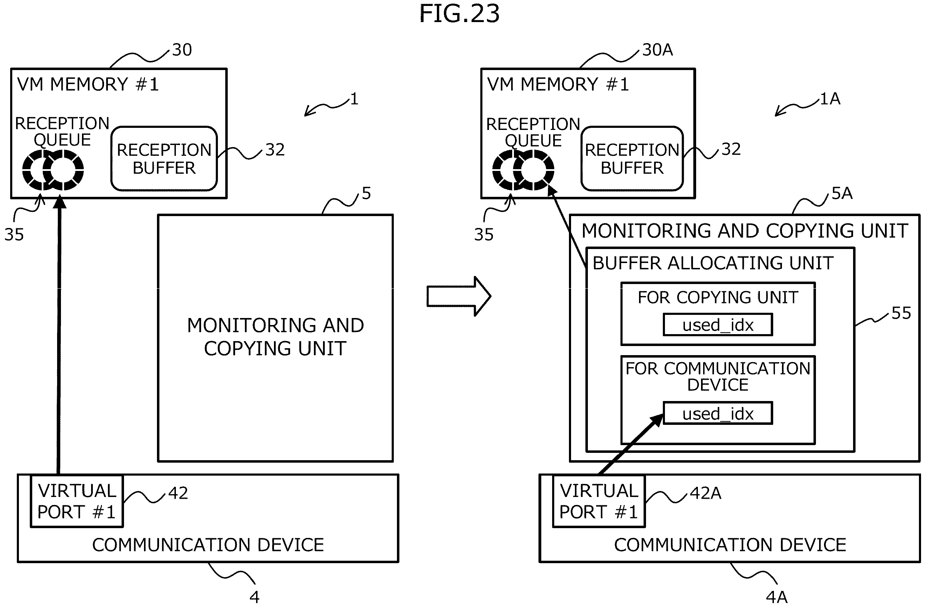

First, description will now be made in relation to an example of the operation of the initializing process. FIG. 23 is a diagram illustrating an example of the operation of an initializing process performed in the server 1A.

As illustrated on the left side of the drawing of FIG. 23, in the communication device 4 of the server 1 (see FIG. 4), the communication device 4 updates the processed index of the reception queue 35 of the VM memory 30 of the destination (receiver) corresponding to the virtual port 42 and thereby notifies the completion of forwarding to the destination VM.

On the other hand, as illustrated on the right side of the drawing of FIG. 23, when the destination VM establishes the connection with the virtual port 42A of the communication device 4A, the server 1A may also change the setting of the communication device 4A by performing an initializing process of the monitoring and copying unit 5A.

For example, in the communication device 4A, the address of the processed index updated by the virtual port 42A may be changed from the address of the processed index of the reception queue 35 to the address of the processed index 554 for the communication device of the buffer allocating unit 55.

In the monitoring and copying unit 5A, the address of the reception queue 35 of the destination VM may be set in the buffer allocating unit 55. This makes the buffer allocating unit 55 possible to notify the completion of reception to the destination VM.

The initializing process may be performed by, for example, an administrator or a user of the server 1A, or may be performed by one or more of the processor 2A, the communication device 4A, and the monitoring and copying unit 5A.

### (1-7-2) Buffer Distributing Process:

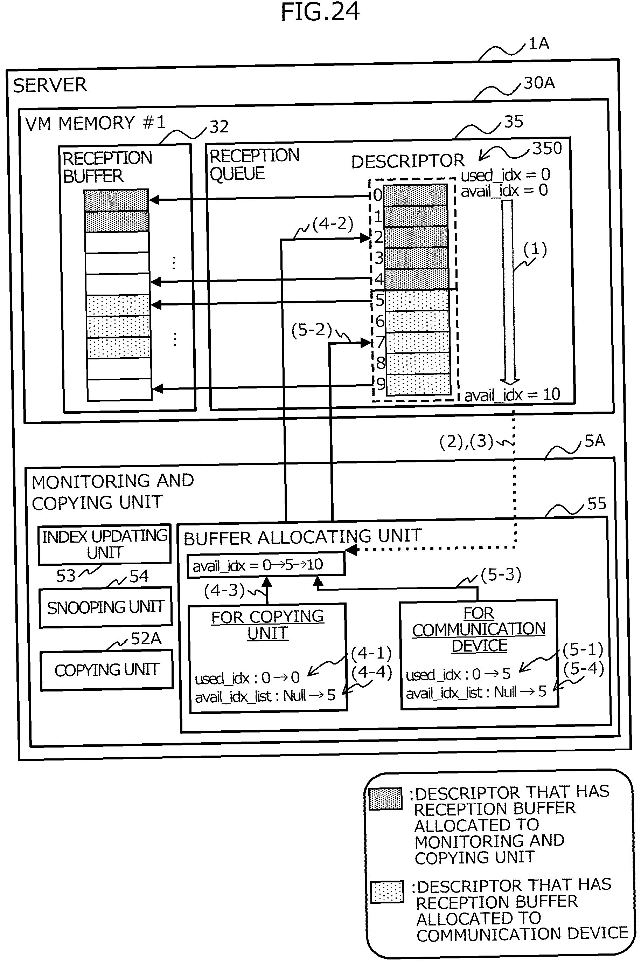

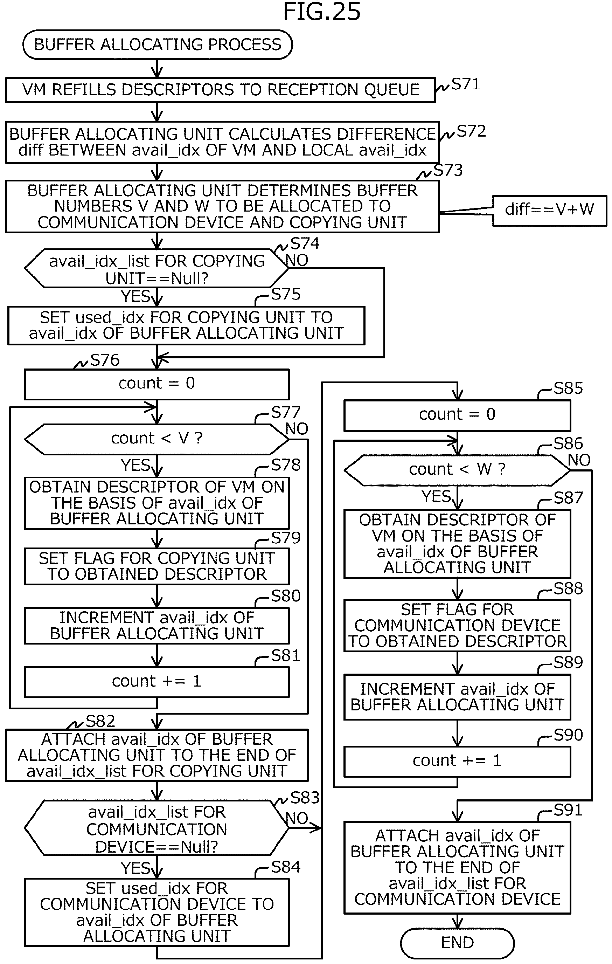

Next, description will now be made in relation to an example of the operation of a buffer distributing process. FIG. 24 is a diagram illustrating an example of the operation of a buffer distributing process in the server 1A, and FIG. 25 is a flow diagram illustrating an example of the operation of the buffer distributing process in the server 1A.

As illustrated in FIG. 24, the destination (receiver) VM refills the reception queue 35 with the descriptors 350 (Step S71 in FIG. 25), and updates the avail_idx by the number of the refilled descriptors 350 ("10" in FIG. 24) (see Arrow (1)).

The buffer allocating unit 55 calculates the difference diff between the value "10" of the avail_idx of the VM and the value "0" of the local avail_idx (Step S72 of FIG. 25). The buffer allocating unit 55 calculates and determines the numbers V and W of buffers to be allocated to the monitoring and copying unit 5A and the communication device 4A, respectively, from the difference diff ("10" in the example of FIG. 24) (see Arrows (2) and (3); Step S73 in FIG. 25). It is premised that the values of V and W satisfy diff=V+W.

In the example of FIG. 24, the buffer allocating unit 55 allocates the half of the buffers to each of the monitoring and copying unit 5A and the communication device 4A (V=W="5"), but the present invention is not limited thereto. For example, the buffer allocating unit 55 may machine-learn the respective receiving ratios of the monitoring and copying unit 5A and the communication device 4A, and distribute the buffers at an appropriate ratio.

The buffer allocating unit 55 sets the used_idx and the avail_idx_list of the buffer allocating unit 55 in order to allocate the buffer. For example, in cases where the buffers are allocated in the order of the monitoring and copying unit 5A and then the communication device 4A, the buffer allocating unit 55 may set the used_idx and the avail_idx_list for the monitoring and copying unit 5A, and then set the used_idx and the avail_idx_list for the communication device 4A.

The buffer allocating unit 55 determines whether or not the avail_idx_list for the copying unit 52A is "Null" (Step S74 of FIG. 25). If the avail_idx_list for the copying unit 52A is not "Null"(NO in Step S74), the process proceeds to Step S76.

If the avail_idx_list for the copying unit 52A is "Null" (YES in Step S74), the buffer allocating unit 55 sets the value "0" (starting point of allocation) of the avail_idx in the used_idx for the copying unit 52A (see Arrow (4-1); Step S75 of FIG. 25).

The buffer allocating unit 55 initializes the variable count by setting the variable count to "0" (zero) (Step S76 in FIG. 25), and determines whether or not the count is less than V (Step S77). If the count is less than V (YES in Step S77), the buffer allocating unit 55 obtains the descriptor(s) 350 of the VM corresponding to the value based on the value of the avail_idx (Step S78). Then, the buffer allocating unit 55 sets a flag indicating that each of the obtained descriptors 350 is for the copying unit 52A in the descriptor 350 (see Arrow (4-2); Step S79 in FIG. 25).

The buffer allocating unit 55 increments the value of the avail_idx (see Arrow (4-3); Step S80 in FIG. 25) and adds (increments) 1 to the count (Step S81), and the process proceeds to Step S77. That is, the buffer allocating unit 55 may execute the allocating process indicated by Arrows (4-2) and (4-3) and Steps S78 to S80 the number of times the same as the buffer number V to be allocated to the monitoring and copying unit 5A.

If the count is equal to or greater than V (NO in Step S77 in FIG. 25), the buffer allocating unit 55 adds the value "5" (the end point of the allocation) of the avail_idx to the end of the avail_idx_list for the copying unit 52A (see Arrow (4-4); Step S82 in FIG. 25).

Then, the buffer allocating unit 55 determines whether or not the avail_idx_list for the communication device 4A is "Null" (Step S83 in FIG. 25). If the avail_idx_list for the communication device 4A is not "Null" (NO in Step S83), the process proceeds to Step S85.

If the avail_idx_list for the communication device 4A is "Null" (YES in Step S83), the buffer allocating unit 55 sets the value "5" (starting point of allocation) of the avail_idx in the used_idx for the communication device 4A (see Arrow (5-1); Step S84 in FIG. 25).

The buffer allocating unit 55 initializes the variable count by setting the variable count to "0" (zero) (Step S85 in FIG. 25), and determines whether or not the count is less than W (Step S86). If the count is less than W (YES in Step S86), the buffer allocating unit 55 obtains the descriptor(s) 350 of the VM corresponding to the value based on the value of the avail_idx (Step S87). Then, the buffer allocating unit 55 sets a flag indicating that each of the obtained descriptors 350 is for the communication device 4A in the descriptor 350 (see Arrow (5-2); Step S88 in FIG. 25) .

The buffer allocating unit 55 increments the value of the avail_idx (see Arrow (5-3); Step S89 in FIG. 25) and adds (increments) 1 to the count (Step S90), and the process proceeds to Step S86. That is, the buffer allocating unit 55 may execute the allocating process indicated by Arrows (5-2) and (5-3) and Steps S87 to S89 the number of times the same as the buffer number W to be allocated to the communication device 4A.

In cases where the count is W or more (NO in Step S86 in FIG. 25), the buffer allocating unit 55 adds the value "10" (the end point of the allocation) of the avail_idx to the end of the avail_idx_list for the communication device 4A (see Arrow (5-4); Step S91 in FIG. 25), and the buffer distributing process ends.

### (1-7-3) Memory Copying Process

Next, description will now be made in relation to an example of the operation of a memory copying process. Hereinafter, being based on the memory copying process by the server 1 described with reference to FIGS. 10 and 11, description will now be made in relation to an example of an operation focusing on a receiving process on the side of the destination VM by the memory copying in the server 1A. The memory copying process may be performed in parallel with the forwarding process performed by the communication device 4A.

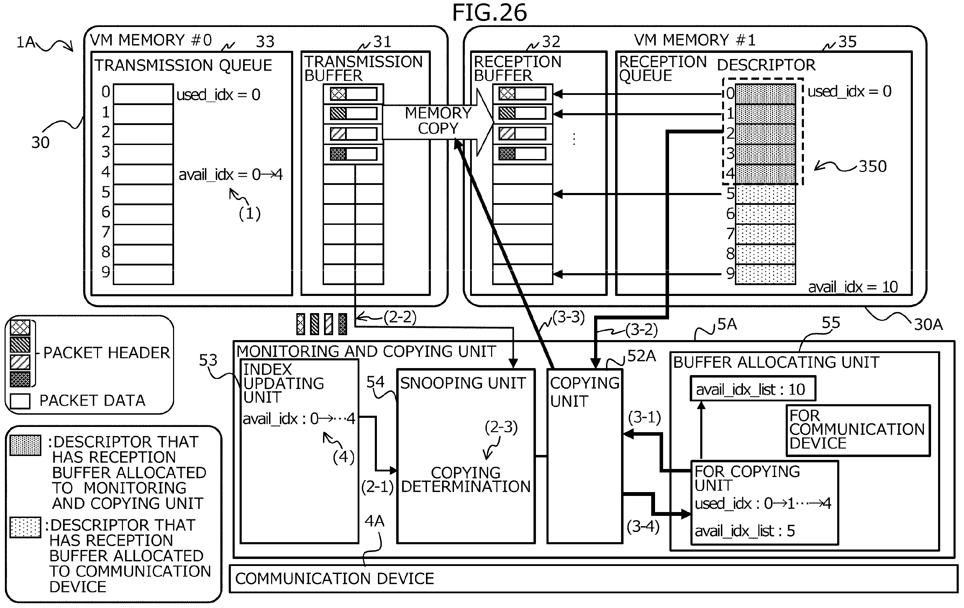

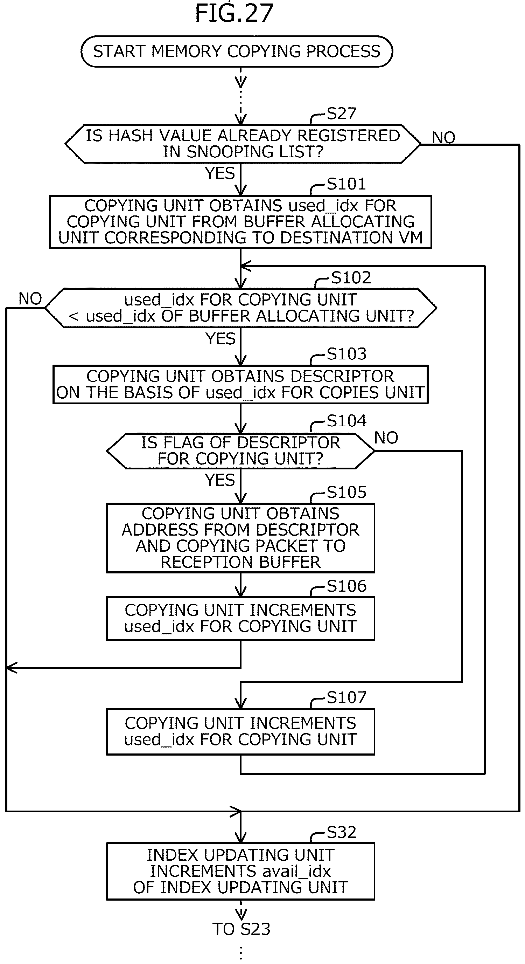

FIG. 26 is a diagram illustrating an example of the operation of a receiving process of data of the memory copying in the server 1A, and FIG. 27 is a flow diagram illustrating an example of the operation of the receiving process of data of the memory copying in the server 1A. FIG. 27 corresponds to a flow diagram of the process of Steps S27 to S32 of the memory copying process illustrated in FIG. 11, in which the processes of Steps S28 to S31 are replaced with the processes of Steps S101 to S107.

As illustrated in FIG. 26, the sender VM writes a packet into the transmission buffer 31 of the VM memory #0 and updates the avail_idx of the transmission queue 33 (see Arrow (1)).

The snooping unit 54 reads one header portion of a packet (see Arrow (2-2)) from the transmission buffer 31 on the basis of the avail_idx of the index updating unit 53 (see Arrow (2-1)). The snooping unit 54 calculates the hash value of the destination MAC of the header portion of the read packet (Step S26 of FIG. 11) and makes a copying determination as to whether or not memory coping is to be performed by checking the calculated hash value with the snooping list 54a (see Arrow (2-3)).

If the calculated hash value has been registered in the snooping list 54a (Step S27 and YES in Step S27 in FIG. 27), the copying unit 52A obtains the used_idx for the copying unit 52A from the buffer allocating unit 55 corresponding to the destination VM (see Arrow (3-1); Step S101 in FIG. 27).

The copying unit 52A determines whether or not the used_idx for the copying unit 52A is less than the avail_idx of the buffer allocating unit 55 (Step S102 in FIG. 27). When the used_idx for the copying unit 52A is equal to or larger than the avail_idx of the buffer allocating unit 55 (NO in the Step S102 in FIG. 27), the index updating unit 53 increments the avail_idx of the index updating unit 53 (Step S32), and the process proceeds to Step S23. That is, the process of Step S23 (see FIG. 11) to Step S32 is repeated by the amount of the written data (the difference between the avail_idx of the transmission queue 33 and the avail_idx of the index updating unit 53).

When the used_idx for the copying unit 52A is less than the avail_idx of the buffer allocating unit 55 (YES in the Step S102 of FIG. 27), the copying unit 52A obtains the descriptor(s) 350 based on the used_idx for the copying unit 52A (see Arrow (3-2); Step S103 in FIG. 27).

The copying unit 52A determines whether or not the flag of the obtained descriptor 350 indicates the copying unit 52A (Step S104). If the flag does not indicate the copying unit 52A (NO in Step S104), the copying unit 52A increments the used_idx for the copying unit 52A (Step S107), and the process proceeds to Step S102.

If the flag indicates the copying unit 52A (YES in Step S104), the copying unit 52A obtains the address 351 of the reception buffer 32 from the descriptor 350 and memory copies the packet from the transmission buffer 31 to the address 351 of the reception buffer 32 (see Arrow (3-3); Step S105 of FIG. 27).

The copying unit 52A updates the used_idx for the copying unit 52A by, for example, increment (see Arrow (3-4); Step S106 in FIG. 27), and the process proceeds to Step S32.

### (1-7-4) Forwarding Process:

Next, description will now be made in relation to an example of the operation of a forwarding process. Hereinafter, being based on the forwarding process by the server 1 described with reference to FIGS. 12 and 13, description will now be made in relation to an example of an operation focusing on a receiving process on the side of the destination VM side by the forwarding process in the server 1A. The forwarding process may be performed in parallel with the memory copying process performed by the monitoring and copying unit 5A.

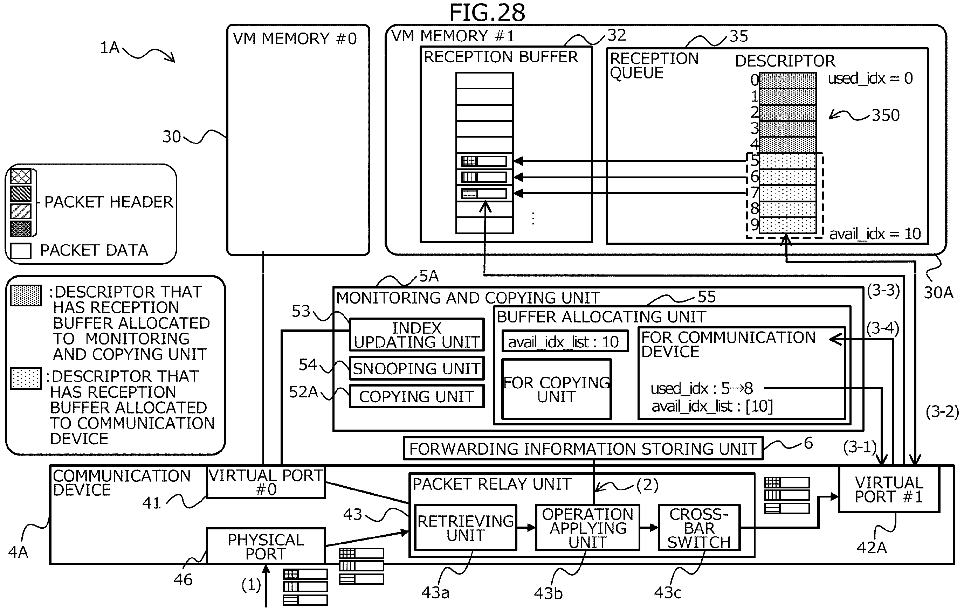

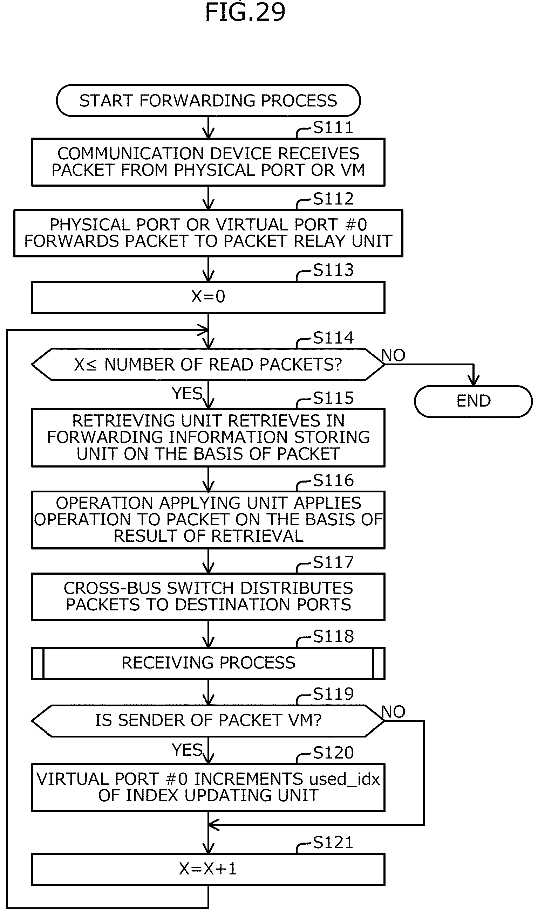

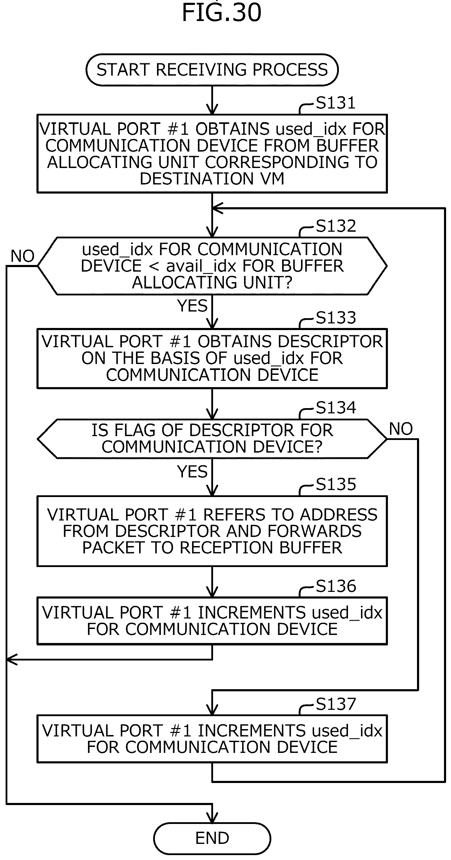

FIG. 28 is a diagram illustrating an example of the operation example of a receiving process of data in the forwarding process in the server 1A, and FIG. 29 is a flow diagram illustrating an example of the operation of the forwarding process in the server 1A. FIG. 30 is a flow diagram illustrating an example of the operation of the receiving process illustrated in FIG. 29. As illustrated in FIG. 29, in the forwarding process in the server 1A, the sender of a packet targets at both the physical port 46 and the VM.

As illustrated in FIG. 28, the communication device 4A receives packets from the physical port 46 or a VM (the physical port 46 in the example of FIG. 28) (see Arrow (1); Step S111 in FIG. 29).

The physical port 46 or the virtual port 41 (#0) forwards the packets to the packet relay unit 43 (Step S112). For example, the following description assumes that the communication device 4 sets the variable X to "0" (Step S13), and if the variable X is equal to or less than the number of read packets (Step S114 and YES in Step S114), carries out the processes of Arrows (2) to (3-4) of FIG. 28.

In the process of Arrow (2), the retrieving unit 43a selects one of the input packets and retrieves the setting information of the selected packet in the forwarding information storing unit 6 on the basis of the selected packet (Step S115 in FIG. 29). The operation applying unit 43b applies an operation to the packet on the basis of the result of the retrieval (Step S116). The cross-bar switch 43c distributes the packet to the destination port according to the applied operation (Step S117).

Upon receipt of the packet, the virtual port 42A (#1) executes the receiving process described below (Step S118). The virtual port 42A determines whether or not the sender of the packet is a VM (Step S119). If the sender of the packet is not a VM (NO in Step S119), the process proceeds to Step S121.

If the sender of the packet is a VM (YES in Step S119), the virtual port 41 increments the used_idx of the index updating unit 53 (Step S120). The communication device 4A increments the variable X (Step S121), and the process proceeds to Step S114.

If, in Step S114, the variable X exceeds the number of read packets (NO in Step S114), the process ends.

In the receiving process of Step S118 in FIG. 29, the virtual port 42A obtains the used_idx for the communication device 4A from the buffer allocating unit 55 corresponding to the destination VM (see Arrow (3-1); Step S131 of FIG. 30) .

The virtual port 42A determines whether or not the used_idx for the communication device 4A is less than the avail_idx of the buffer allocating unit 55 (Step S132 in FIG. 30). If the used_idx for the communication device 4A is equal to or larger than the avail_idx of the buffer allocating unit 55 (NO in Step S132 in FIG. 30), the process ends.

If the used_idx for communication device 4A is less than the avail_idx of the buffer allocating unit 55 (YES in Step S132 in FIG. 30), the virtual port 42A acquires descriptors 350 based on the used_idx for communication device 4A (see Arrow (3-2), Step S133) .

The virtual port 42A determines whether or not the flag of the obtained descriptor 350 indicates the communication device 4A (Step S134). If the flag does not indicate the communication device 4A (NO in Step S134), the virtual port 42A increments the used_idx for the communication device 4A (see Arrow (3-4); see Step S137 in FIG. 30), and the process proceeds to Step S132.

If the flag indicates the communication device 4A (YES in Step S134), the virtual port 42A obtains the address 351 of the reception buffer 32 from the descriptor 350 and forwards the packet to the address 351 of the reception buffer 32 (see Arrow (3-3); Step S135 in FIG. 30). The virtual port 42A increments the used_idx for the communication device 4A (see Arrow (3-4); Step S136 in FIG. 30), and the process ends.

### (1-7-5) Notifying Process of Reception to VM:

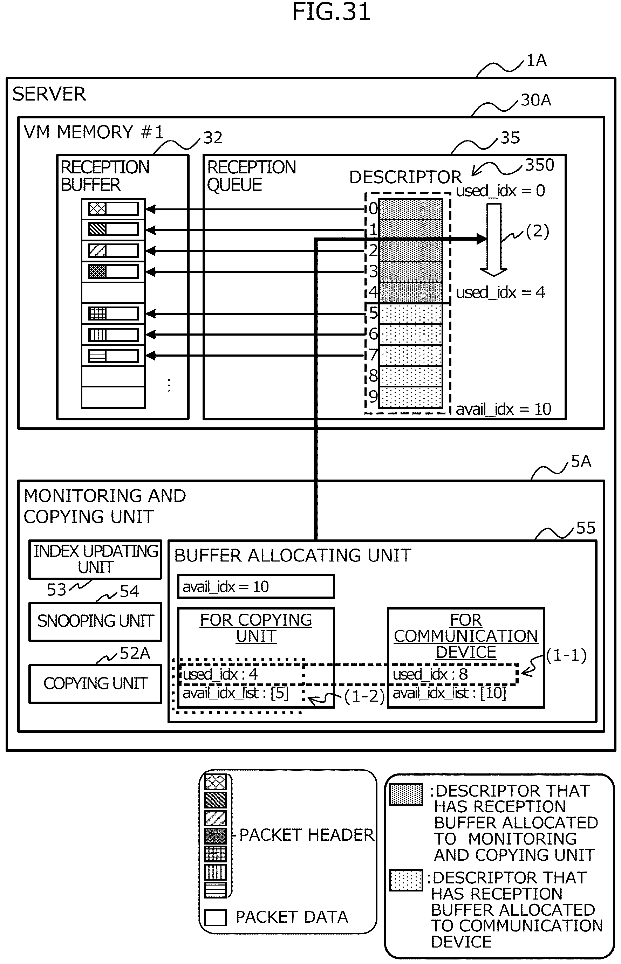

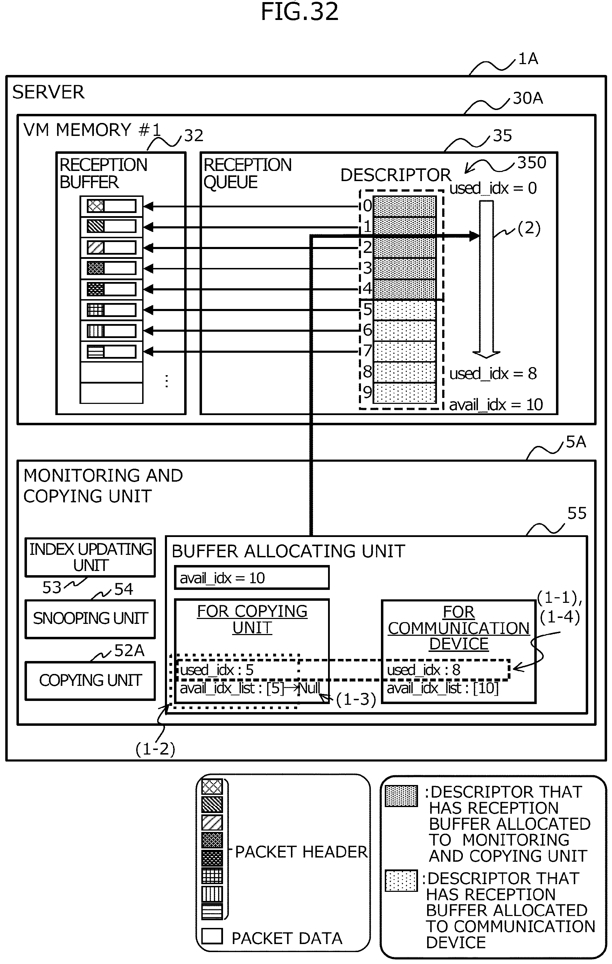

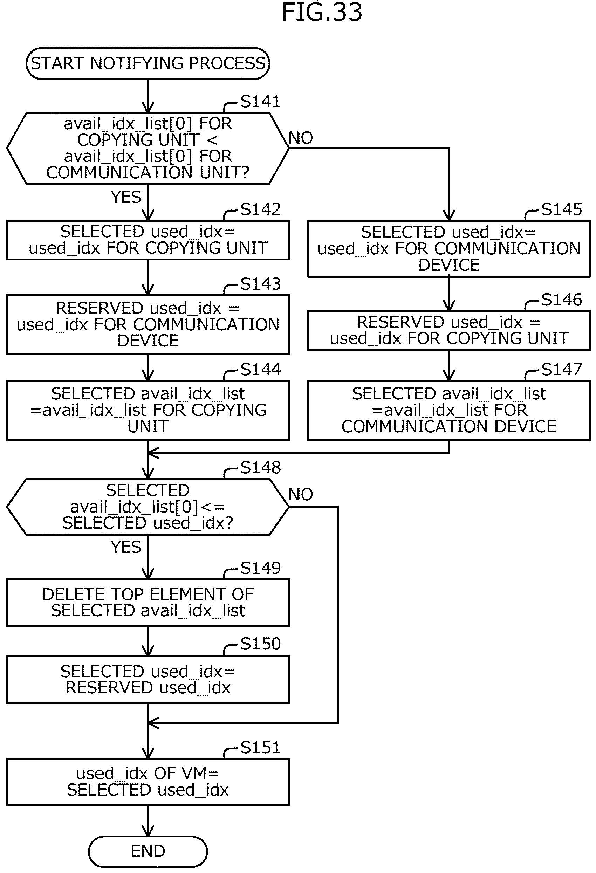

Next, description will now be made in relation to an example of the operation of a notifying process of reception to the VM. FIGS. 31 and 32 are diagrams illustrating an operation example of the operation of a notifying process of reception to a VM in the server 1A, and FIG. 33 is a flow diagram illustrating an example of the operation of the notifying process of reception to the VM.

The buffer allocating unit 55 sets the used_idx of the destination VM to the smaller one of the used_idx for the monitoring and copying unit 5A and the used_idx for the communication device 4A. This makes it possible to encourage the destination VM to receive a packet as much as possible even if an empty buffer is present between buffers allocated to the monitoring and copying unit 5A and buffers allocated to the communication device 4A. Further, this can suppress the occurrence of the inconvenience described with reference to FIG. 18. For this purpose, the buffer allocating unit 55 updates the used_idx of the destination VM by the scheme illustrated in FIGS. 31 to 33.

As illustrated in FIG. 31, the buffer allocating unit 55 selects the smaller one of the values of the used_idx for the copying unit 52A and that the communication device 4A (see Arrow (1-1)). The smaller value of the used_idx is, in other words, the access source allocated earlier by the buffer allocating unit 55. Therefore, the buffer allocating unit 55 may select a smaller value of the last index (the top of the avail_idx_list) allocated to the access source. For example, when the top element of the avail_idx_list is represented by the list name [0], the buffer allocating unit 55 determines whether or not the avail_idx_list [0] for the copying unit 52A is less than the avail_idx_list [0] for the communication device 4A (Step S141 in FIG. 33).

If the avail_idx_list [0] for the copying unit 52A is less than the use avail_idx_list [0] for the communication device 4A (YES in Step S141), the buffer allocating unit 55 sets the used_idx for the copying unit 52A to the selected used_idx (Step S142). Further, the buffer allocating unit 55 sets the used_idx for the communication device 4A in the reserved used_idx (Step S143) and sets the avail_idx_list for the copying unit 52A into the selected avail_idx_list (Step S144), and the process proceeds to Step S148.

On the other hand, if the avail_idx_list[0] for the copying unit 52A is equal to or larger than the avail_idx_list[0] for the communication device 4A (NO in Step S141), the buffer allocating unit 55 sets the used_idx for the communication device 4A to the selected used_idx (Step S145). Further, the buffer allocating unit 55 sets the used_idx copying unit 52A in the reserved used_idx (Step S146), sets the avail_idx_list for the communication device 4A in the selected avail_idx_list (Step S147), and the process proceeds to Step S148.

The buffer allocating unit 55 obtains the index (selected avail_idx_list [0]) at the end of the allocated descriptor 350 from the beginning of the selected avail_idx_list, and determines whether or not the selected avail_idx_list [0] is equal to or less than the selected used_idx (see Arrow (1-2); Step S148 of FIG. 33).

If the selected avail_idx_list [0] is larger than the selected used_idx (NO in Step S148), the buffer allocating unit 55 sets the used_idx of the VM to the selected used_idx (see Arrow (2); Step S151 in FIG. 33), and the notifying process ends.

The selected avail_idx_list [0] being equal to or less than the selected used_idx (YES in the Step S148) means that the access source corresponding to the selected used_idx has used all the entries of the reception buffer 32 allocated thereto, in other words, all the allocated descriptors 350.

In this case, for example, as illustrated in FIG. 32, if the access source corresponding to the selected used_idx is the copying unit 52A, the used_idx for the copying unit 52A is equal to the value at the top of the avail_idx. This means that the reception buffer 32 has no empty buffer between buffers allocated to the copying unit 52A and buffers allocated the communication device 4A. Therefore, the buffer allocating unit 55 causes the VM to proceed the receiving process to the top entry allocated to the communication device 4A.

For example, the buffer allocating unit 55 removes (e.g., by setting "Null" in) the top element of the selected avail_idx_list (see Arrow (1-3) in FIG. 32; Step S149 in FIG. 33). The buffer allocating unit 55 sets the reserved used_idx in the selected used_idx (see Arrow (1-4); the Step S150 in FIG. 33), sets the selected used_idx in the used_idx of the VM (in this case, equal to the reserved used_idx) (see Arrow (2); Step S151 in FIG. 33), and the notifying process ends.

### (1-7-6) Buffer Distributing Process (when reallocation);

The destination VM carries out the receiving process on data stored in the reception buffer 32 in the notifying process of reception to the VM described with reference to FIGS. 31-33 and, if detecting a lack of the reception buffer 32, releases used reception buffer 32. When releasing a certain number of reception buffers 32, the destination VM reallocates the reception buffer 32.

If the reception buffer 32 is reallocated, the buffer allocating unit 55 executes the buffer distributing process described with reference to FIGS. 24 and 25.

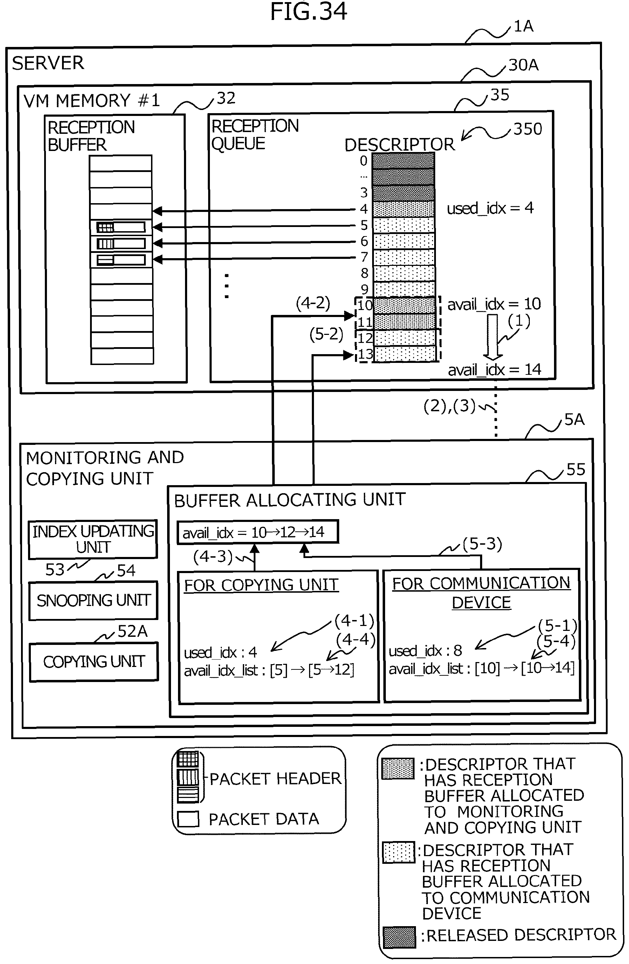

FIG. 34 is a diagram illustrating an example of the operation of a buffer distributing process (when reallocation) in the server 1A. The processes of Arrows (1) to (5-4) illustrated in FIG. 34 are the same as those of Arrows (1) to (5-4) illustrated in FIG. 24. The buffer allocating unit 55 distributes the reception buffer 32 to the access source in the same manner as that in FIGS. 24 and 25, but at this time, determines whether or not the descriptor 350 previously allocated to the access source remains. This determination is performed in Steps S74 and S83 illustrated in FIG. 25.

If the = Null" is satisfied (YES in Steps S74 and S83 in FIG. 25), since the descriptor 350 is newly allocated to the access source, the buffer allocating unit 55 updates the used_idx (Steps S75 and S84).

On the other hand, the = Null" not being satisfied (NO in Steps S74 and S83 in FIG. 25) means that a value has been set in the avail_idx_list as illustrated in FIG. 34 and a descriptor 350 previously allocated remains. Therefore, the buffer allocating unit 55 does not change the top position (used_idx) of the allocation (see Arrows (4-1) and (5-1) in FIG. 34), in other words, skips Steps S75 and S84 in FIG. 25.

In the example of FIG. 34, indexes "0" to "3" of the descriptor 350 are released by the VM, and indexes "10" to "13" are allocated to the access source by the VM. It is assumed that the buffer allocating unit 55 determines V=W="2" (diff="14-10"="4"=V+W), and distributes "10" and "11" to the copying unit 52A and distributes "12" and "13" to the communication device 4A.

Further, for the descriptor 350 newly allocated by reallocation, the buffer allocating unit 55 attaches the last index after the reallocation to the end of the avail_idx_list (see Arrows (4-4) and (5-4); Steps S82 and S91 in FIG. 25). For example, the buffer allocating unit 55 adds the end points of the allocation to the respective access sources by attaching "12" to the end of the avail_idx_list for the copying unit 52A, and attaching "14" to the end of the avail_idx_list for the communication device 4A.

### (1-7-7) Releasing Process of Unreceived Buffer (for Copying Unit)

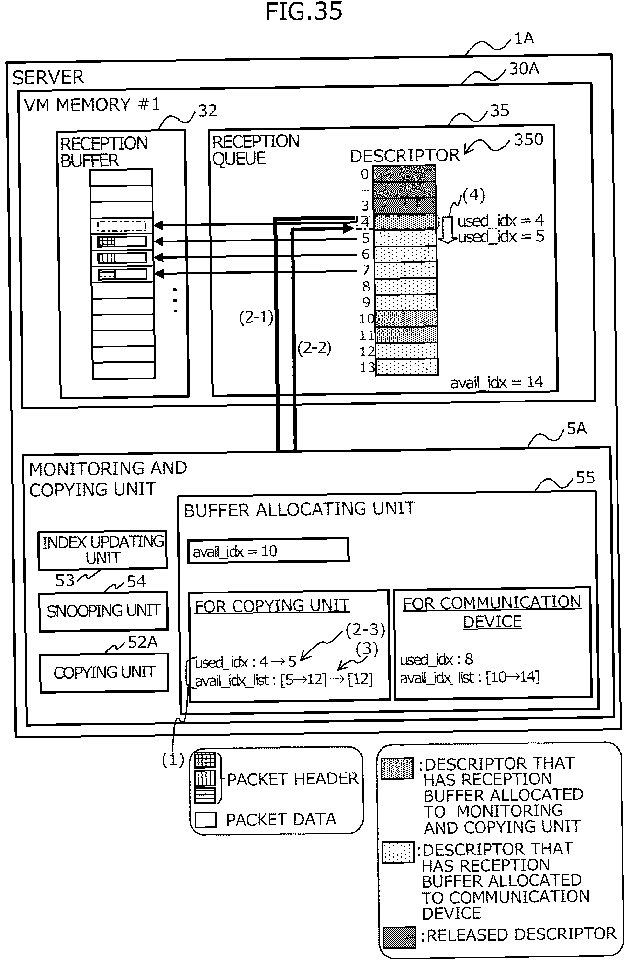

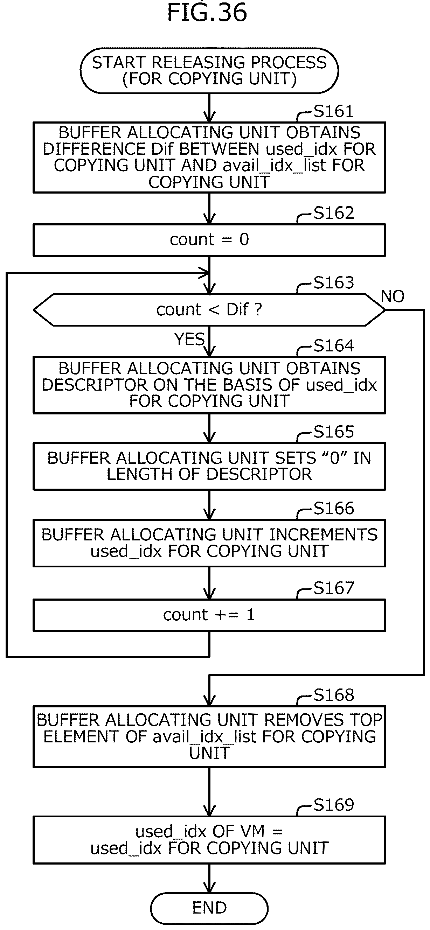

Next, description will now be made in relation to an example of an operation of a releasing process of an unreceived allocated to the copying unit 52A. An "unreceived buffer" may mean a reception buffer 32 that has not received yet. FIG. 35 is a diagram illustrating an example of the operation of a releasing process (for the copying unit 52A) of an unreceived buffer in the server 1A, and FIG. 36 is a flow diagram illustrating an example of the operation of the releasing process (for the copying unit 52A) of an unreceived buffer in the server 1A.

For example, the buffer allocating unit 55 periodically checks the presence of an unreceived buffer at a position close to the used_idx for the copying unit 52A, and, if an unreceived buffer is present for a given time period, causes the VM to release the unreceived buffer.

The following description made with reference to FIG. 35 and FIG. 36 assumes that execution of the process by the buffer allocating unit 55 is triggered by detection of a reception buffer 32 that has not received data for a predetermined time period as a result of periodic checking.

As illustrated in FIG. 35, the buffer allocating unit 55 obtains the difference Dif between the value at the top of the used_idx for the copying unit 52A and the value at the top of the avail_idx_list for the copying unit 52A (see Arrow (1); Step S161 in FIG. 36).

The buffer allocating unit 55 initializes the variable count by setting "0" in the variable count (Step S162 in FIG. 36), and determines whether or not the count is less than the Dif (Step S163). If the count is less than the Dif (YES in Step S163), the buffer allocating unit 55 obtains the descriptor 350 on the basis of the used_idx for the copying unit 52A (see Arrow (2-1); Step S164 in FIG. 36).

The buffer allocating unit 55 sets "0" in the length 353 of the descriptor 350 (see Arrow (2-2); Step S165 in FIG. 36) .

The buffer allocating unit 55 increments the used_idx for the copying unit 52A (see Arrow (2-3); Step S166 in FIG. 36), adds (increments) "1" to the variable count (Step S167), and the process proceeds to Step S163.

In the Step S163, when the count is the Dif or more (NO in the Step S163), the buffer allocating unit 55 removes the top element of the avail_idx_list for the copying unit 52A (see Arrow (3); the Step S168 in FIG. 36).

The buffer allocating unit 55 sets the value of the used_idx for the copying unit 52A in the used_idx of the VM (see Arrow (4); Step S169 in FIG. 36), and the process ends.

As described above, when detecting an unreceived buffer that exists (is not used) for a given time period, the buffer allocating unit 55 can change the unreceived buffer to a state of being receivable by the VM by setting dummy data in the unreceived buffer.

Further, by setting the length 353 of the descriptor 350 to "0", it is possible to encourage the VM to release the reception buffer 32 while suppressing the load of reading data from the VM memory 30A (reception buffer 32).

### (1-7-8) Releasing Processing of Unreceived Buffer (for Communication Devices)

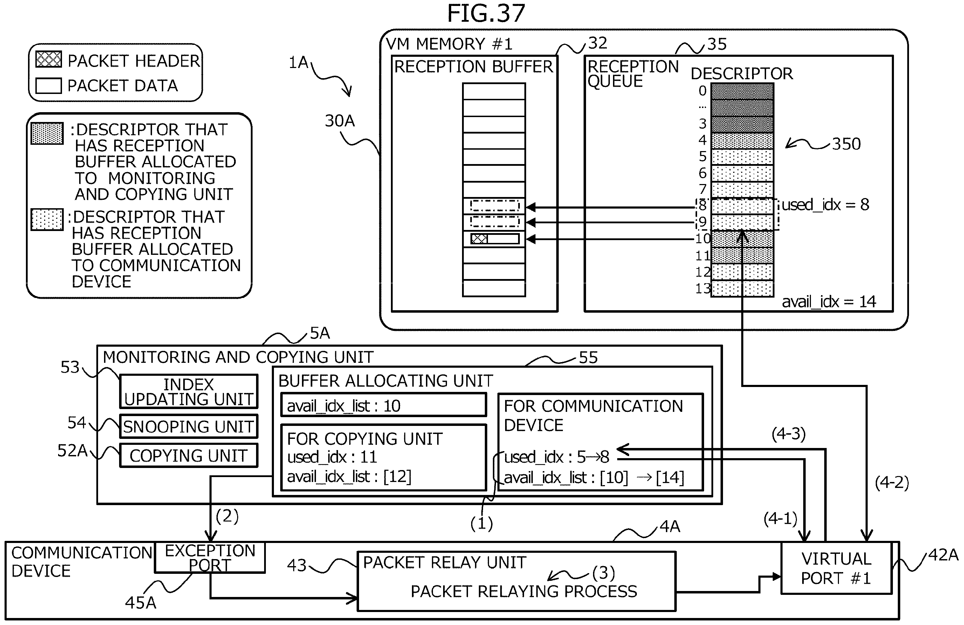

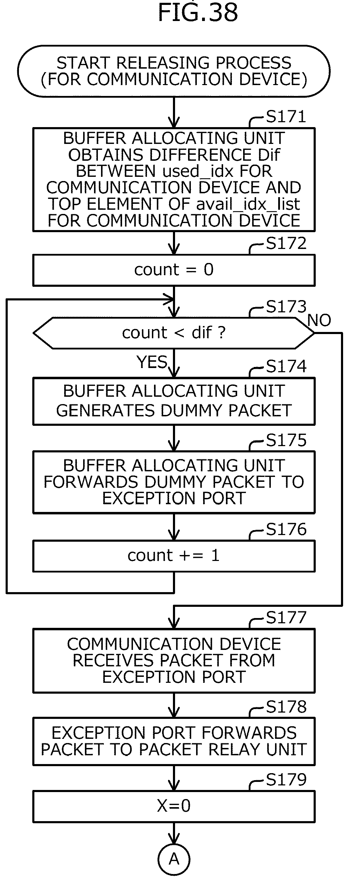

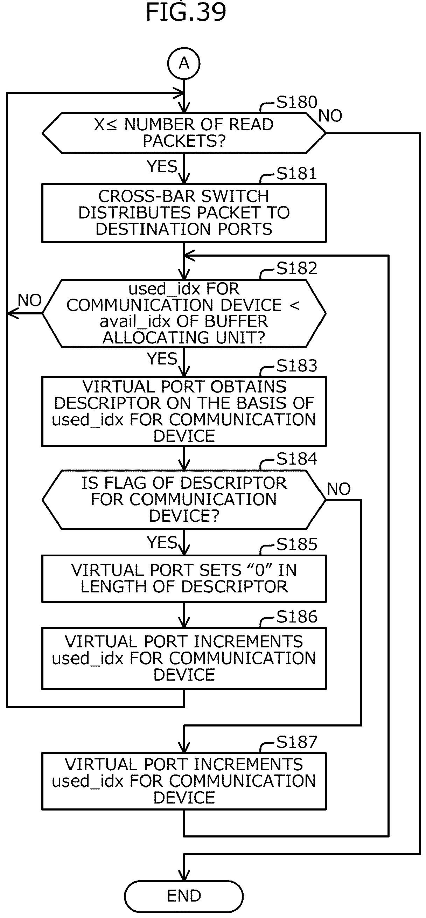

Next, description will now be made in relation to an example of the operation of a releasing process of an unreceived allocated to the communication device 4A. FIG. 37 is a diagram illustrating an example of the operation of a releasing process (for the communication device 4A) of an unreceived buffer in the server 1A, and FIGS. 38 and 39 are flow diagrams illustrating an example of the operation of the releasing process (for the communication unit 4A) of an unreceived buffer in the server 1A.

For example, the buffer allocating unit 55 periodically checks the presence of an unreceived buffer (e.g., entry) in the reception buffer 32 at a position close to the used_idx for the communication unit 4A, and, if an unreceived buffer is present for a given time period, causes the VM to release the unreceived buffer.

The following description to be made with reference to FIGS. 37-39 assumes that execution of the process by the buffer allocating unit 55 is triggered by detection of a reception buffer 32 that has unreceived entry for a predetermined time period as a result of periodic checking.

As illustrated in FIG. 37, the buffer allocating unit 55 obtains the difference dif between the used_idx for the communication device 4A and the value at the top of the avail_idx_list for the communication device 4A (see Arrow (1); Step S171 in FIG. 38).

The buffer allocating unit 55 initializes the variable count by setting "0" in the variable count (Step S172 in FIG. 38), and determines whether or not the count is less than the dif (Step S173). If the count is less than the dif (YES in Step S173), the buffer allocating unit 55 generates a dummy packet (Step S174).

The buffer allocating unit 55 forwards the generated dummy packet to the exception port 45A of the communication device 4A (see Arrow (2); Step S175 in FIG. 38), adds (increments) "1" to the variable count (Step S176), and the process proceeds to Step S173.

In Step S173, if count is equal to or larger than the dif (NO in Step S173), the forwarding of the dummy packet by the buffer allocating unit 55 ends. Upon receipt of a (dummy) packet from the exception port 45A (Step S177), the communication device 4A forwards the packet to the packet relay unit 43 (Step S178) .

The communication device 4A may repeatedly perform the process of Arrows (3) to (4-3) of FIG. 37 the number of times the same as the number of read packets. FIGS. 38 and 39 are described, for convenience, on the assumption that the communication device 4A sets the variable X to "0" (Step S179), and in cases where the variable X is equal to or less than the number of read packets (Step S180, YES in Step S180), carries out the process of the Arrows (3) to (4-3) in FIG. 37.

In the process of Arrow (3), the packet relay unit 43 performs a packet relaying process. The packet relay unit 43 causes, in the packet relay process, the cross-bar switch 43c to distribute the packet to the destination port(s) (Step S181 in FIG. 39).

Each virtual port 42A of the distribution destination determines whether or not the used_idx for the communication device 4A is less than the avail_idx of the buffer allocating unit 55 (see Arrow (4-1); Step S182 in FIG. 39). If the used_idx for the communication device 4A is equal to or larger than the avail_idx of the buffer allocating unit 55 (NO in Step S182), the process proceeds to Step S180, and processing on the next dummy packet is performed.

If the used_idx for communication device 4A is less than the avail_idx of the buffer allocating unit 55 (YES in Step S182), the virtual port 42A acquires a descriptor 350 based on used_idx for communication device 4A (Step S183).

The virtual port 42A determines whether or not the flag of the descriptor 350 indicates the communication device 4A (Step S184). If the flag does not indicate the communication device 4A (NO in Step S184), the virtual port 42A increments the used_idx for the communication device 4A (see Arrow (4-3); Step S187 of FIG. 39) because the descriptor 350 associated with the flag is not one for the communication device 4A, and the process proceeds to Step S182.

If the flag of the descriptor 350 indicates the communication device 4A (YES in Step S184), the virtual port 42A sets "0" in the length of the descriptor 350 (see Arrow (4-2); Step S185 of FIG. 39).

The virtual port 42A increments the used_idx for the communication device 4A (see Arrow (4-3); see Step S186 of FIG. 39), and the process proceeds to Step S180.

If, in Step S180, the variable X exceeds the number of read packets (NO in Step S180), the process ends.

As described above, the buffer allocating unit 55 forwards the dummy packet through the exception port 45A to the packet relay unit 43 of the communication device 4A, and causes the virtual port 42A to transmit the dummy data to the VM memory 30A. As described above, by operating the used_idx for the communication device 4A and the descriptor 350 by the buffer allocating unit 55 (software), it is possible to prevent a conflict in writing to the VM memory 30A between the communication device 4A and the monitoring and the copying unit 5A.

Further, by setting the length 353 of the descriptor 350 to "0", the virtual port 42A can encourage the VM to release the reception buffer 32 while suppressing the load of reading data from the VM memory 30A (reception buffer 32).

The dummy packet described above may be regarded as a packet that causes, for example, the virtual port 42A to set "0" in the length 353 of the descriptor 350 corresponding to a reception buffer 32 of the destination of the dummy packet. A dummy packet may be a packet that sets the length 353 to "0" according to the logic of the virtual port 42A. Alternatively, the dummy packet may be a packet commonly known to the buffer allocating unit 55 and the virtual port 42A, as an example, a packet defined to set the length 353 to "0".

Further, in response to reception of a dummy packet, the virtual port 42A may set the length 353 of the descriptor 350 to "0" and also suppress writing of data into the reception buffer 32. This makes it possible to suppress the load of writing data from the communication device 4A to the VM memory 30A (reception buffer 32).

The releasing process of an unreceived buffer for the copying unit 52A and the communication device 4A described with reference to FIGS. 35 to 39 may be executed in parallel (asynchronously) with each other. When the releasing process is performed, the buffer allocating unit 55 executes the notifying process of reception to the VM described with reference to FIGS. 31 to 33. Being triggered by the notifying process, the VM releases the reception buffer 32. When the reception buffer 32 is released, the buffer allocating unit 55 executes the buffer distributing process described with reference to FIGS. 24, 25, and 34.

### (2) Example of Hardware Configuration:

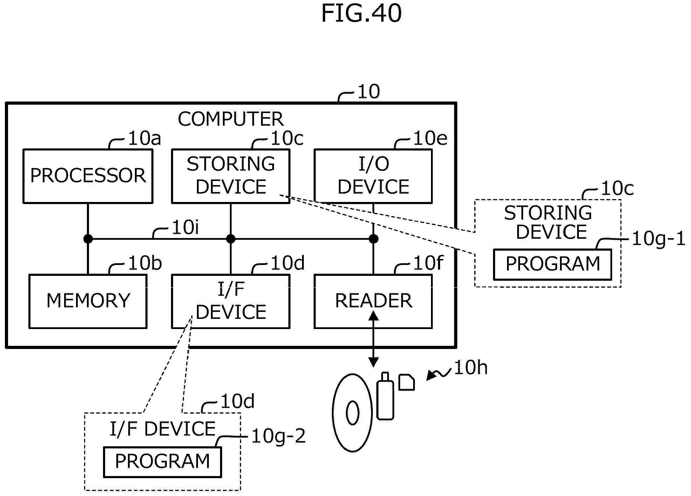

FIG. 40 is a block diagram illustrating an example of the hardware (HW) configuration of a computer 10 that achieves the functions of the servers 1 and 1A. If multiple computers are used as the HW resources for achieving the functions of the servers 1 and 1A, each of the computers may include the HW configuration illustrated in FIG. 40.

As illustrated in FIG. 40, the computer 10 may illustratively include a HW configuration formed of a processor 10a, a memory 10b, a storing device 10c, an I/F device 10d, an I/O device 10e, and a reader 10f.

The processor 10a is an example of an arithmetic operation processing device that performs various controls and calculations. The processor 10a may be communicably connected to the blocks in the computer 10 via a bus 10i. The processor 10a may be a multiprocessor including multiple processors, may be a multicore processor having multiple processor cores, or may have a configuration having multiple multicore processors. The processor 2 illustrated in, for example, FIGS. 3, 5, and 6 and the processor 2A illustrated in, for example, FIGS. 21 and 22 are examples of the processor 10a.

The memory 10b is an example of a HW device that stores various types of data and information such as a program. Examples of the memory 10b include one or both of a volatile memory such as a Dynamic Random Access Memory (DRAM) and a non-volatile memory such as Persistent Memory (PM). The host memory 3 illustrated in, for example, FIGS. 3 to 6 and the host memory 3A illustrated in, for example, FIGS. 20-22 are examples of the memory 10b.

The storing device 10c is an example of a HW device that stores various types of data and information such as program. Examples of the storing device 10c include a magnetic disk device such as a Hard Disk Drive (HDD), a semiconductor drive device such as a Solid State Drive (SSD), and various storing devices such as a nonvolatile memory. Examples of the nonvolatile memory include a flash memory, a Storage Class Memory (SCM), and a Read Only Memory (ROM).

The storing device 10c may store a program 10g-1 that implements all or part of various functions of the computer 10. For example, the processor 10a of the server 1 can achieve the functions of the virtual switch 20 and the monitoring and copying unit 5 (monitoring unit 51 and copying unit 52) illustrated in, for example, FIGS. 3-5, the virtual switch 20 and the monitoring unit 51 illustrated in FIG. 6, the VM arranged in each VM memory 30 illustrated in, for example, FIGs. 3 and 4 by expanding the program 10g-1 stored in the storing device 10c onto the memory 10b and executing the expanded program 10g-1. For example, the processor 10a of the server 1A can achieve the functions of the virtual switch 20 and the monitoring and copying unit 5A (monitoring unit 51, copying unit 52A, and the buffer allocating unit 55) illustrated in, for example, FIGS. 20-21, the virtual switch 20 and the monitoring and copying unit 5A (monitoring unit 51 and the buffer allocating unit 55) illustrated in FIGS. 22, the VM arranged in each VM memories 30 and 30A illustrated in, for example, FIG. 20 by expanding the program 10g-1 stored in the storing device 10c onto the memory 10b and executing the expanded program 10g-1.

In addition, the flow table 22 and the flow cache 23 which are illustrated in, for example, FIGS. 4 and 20 and the forwarding information storing unit 6 illustrated in FIGs. 3, 4 and 20, for example, are each achieved by part of one or the both of the storing regions that the memory 10b or the storing device 10c has.

The I/F device 10d is an example of a communication IF that controls connection and communication with a network. For example, the I/F device 10d may include an applying adapter conforming to Local Area Network (LAN) such as Ethernet (registered trademark) or optical communication such as Fibre Channel (FC), and may be a communication device such as an NIC. The applying adapter may be compatible with one of or both wireless and wired communication schemes. For example, the server 1 may be communicably connected to an external Network (NW) or an external I/F via the I/F device 10d.

The communication device 4 illustrated in, for example, FIGS. 3-6, the copying unit 52 illustrated in FIG. 6, the communication device 4A illustrated in FIGS. 20-22, and the copying unit 52 of FIG. 22 are examples of the I/F device 10d. For example, the I/F device 10d may include programmable logic circuitry, such as an FPGA, and a storing region, and as illustrated in FIG. 40, a program 10g-2 may be stored in the storing region thereof.

The I/F device 10d can achieve the function as the communication devices 4 and 4A by executing a program 10g-2 stored in the storing region by, for example, the FPGA. Further, the other I/F device 10d can achieve the functions as the copying units 52 and 52A by executing the program 10g-2 stored in the storing region by, for example, the FPGA. The copying units 52 and 52A may be an I/O device that is connected to the server 1 via the I/F device 10d.

For example, the programs 10g-1 and 10g-2 may be downloaded from the network to the computer 10 via the I/F device 10d, and then stored respectively in the storing regions of the storing device 10c and the I/F device 10d.

The functions of the servers 1 and 1A of the one embodiment may be achieved by at least a part of these programs 10g-1 and 10g-2. Therefore, at least a part of the programs 10g-1 and 10g-2 can be regarded as the information processing program.

The I/O device 10e may include one or both of an input device and an output device. Examples of the input device include a keyboard, a mouse, and a touch panel. Examples of the output device include a monitor, a projector, and a printer.

The reader 10f is an example of a reader that reads data and programs recorded on a recording medium 10h. The reader 10f may include a connecting terminal or device to which the recording medium 10h can be connected or inserted. Examples of the reader 10f include an applying adapter conforming to, for example, Universal Serial Bus (USB), a drive apparatus that accesses a recording disk, and a card reader that accesses a flash memory such as an SD card. The programs 10g-1 and 10g-2 may be stored in the recording medium 10h. The reader 10f may read the programs 10g-1 and 10g-2 from the recording medium 10h and store the read programs 10g-1 and 10g-2 into the storing device 10c and the I/F device 10d.

The recording medium 10h is an example of a non-transitory computer-readable recording medium such as a magnetic/optical disk, and a flash memory. Examples of the magnetic/optical disk include a flexible disk, a Compact Disc (CD), a Digital Versatile Disc (DVD), a Blu-ray disk, and a Holographic Versatile Disc (HVD). Examples of the flash memory include a semiconductor memory such as a USB memory and an SD card.

The HW configuration of the computer 10 described above is exemplary. Accordingly, the computer 10 may appropriately undergo increase or decrease of HW devices (e.g., addition or deletion of arbitrary blocks), division, integration in an arbitrary combination, and addition or deletion of the bus. For example, in the servers 1 and 1A, at least one of the I/O device 10e and the reader 10f may be omitted.

### (3) Miscellaneous:

The technique according to the one embodiment described above can be changed or modified as follows.

For example, the blocks included in the server 1 illustrated in FIGs. 3-8, 10, 12, and 14 may be merged in any combination or each be divided respectively. Similarly, the blocks included in the server 1A illustrated in FIGS. 20-24, 26, 28, 31, 32, 34, 35 and 37 may be merged in any combination or each be divided respectively.

Further, the description of the one embodiment assumes a case where the server 1 includes a single communication device 4 and a case where the server 1A includes a single communication device 4A, but the configuration of the server 1 is by no means limited to this. Alternatively, the server 1 may include multiple communication devices 4 or 4A because the input/output ports can be discriminated from one another with the PIDs in units of the communication device 4 of 4A.

### REFERENCE SIGNS LIST

1, 1A server
1a memory bus
1b I/O bus
2, 2A processor
20 virtual switch
21, 43 packet relay unit
22 flow table
23 flow cache
24 determining unit
3, 3A host memory
30, 30A VM memory
31 transmission buffer
32 reception buffer
33 transmission queue
34 reception queue for memory copy
35 reception queue
4, 4A communication device
41, 42, 42A virtual port
43a retrieving unit
43b operation applying unit
43c cross-bus switch
44, 44A, 45 exception port
46 physical port
5, 5A monitoring and copying unit
51 monitoring unit
52, 52A copying unit
53 index updating unit
54 snooping unit
54a snooping list
55 buffer allocating unit
6 forwarding information storing unit
6a forwarding information

## Claims

1. An information processing apparatus comprising:
a storing device (3A) comprising a plurality of storing regions allocated one to each of a plurality of virtual machines;
a processing device (2A) that is connected to the storing device (3A) and that executes the plurality of virtual machines;
a relay device (4A) that is connected to the processing device (2A) and that executes a relaying process, serving as a virtual switch that connects the plurality of virtual machines to one another; and
a transfer processor (52A) that transfers data between the plurality of storing regions, wherein
the processing device (2A)
stores a first used identification number associated with a used entry among a plurality of first entries allocated to the transfer processor (52A) and a second used identification number associated with a used entry among a plurality of second entries allocated to the relay device (4A), the first used identification number and the second used identification number being included in a plurality of identification numbers each associated with one of a plurality of entries of a reception buffer (32) included in a first storing region allocated to a first virtual machine among the plurality of virtual machines; and
sets a smaller one of the first used identification number and the second used identification number stored in the processing device (2A), to an identification number being set in the first storing region and representing an entry of data read from the reception buffer (32) by the first virtual machine.

2. The information processing apparatus according to claim 1, wherein the processing device (2A) sets first information in the first storing region, the first information representing which one of the transfer processor (52A) and the relay device (4A) is allocated to each of the plurality of entries.

3. The information processing apparatus according to claim 2, wherein
the processing device (2A)
in a case where the entry associated with the first used identification number is not used for a first given time period,
writes dummy data into each of entries from the entry associated with the first used identification number to a last entry allocated to the transfer processor (52A) and sets
an identification number of the last entry in the first used identification number; and
sets the first used identification number in the identification number set in the first storing region.

4. The information processing apparatus according to claim 2 or 3, wherein
the transfer processor (52A)
in forwarding data from a second storing region to the first storing region,
forwards the data to a first entry specified by the first used identification number and the first information set in the first storing region; and
sets an identification number of the specified first entry in the first used identification number stored in the processing device (2A).

5. The information processing apparatus according to any one of claims 2-4, wherein:
the processing device (2A)
in a case where the entry associated with the second used identification number is not used for a second given time period,
forwards, to the relay device (4A), dummy data for each of entries from the entry associated with the second used identification number to a last entry allocated to the relay device (4A); and
the relay device (4A)
sets an identification number of the last entry in the second used identification number in response to receipt of the dummy data, and
sets second information in the first information in the first storing region, the second information representing that entries of the reception buffer (32) serving as writing destinations of the dummy data are each used.

6. The information processing apparatus according to any one of claims 2-5, wherein
the relay device (4A)
in forwarding data from a second storing region or an external port provided to the relay device (4A) to the first storing region,
forwards the data to a second entry specified by the second used identification number and the first information set in the first storing region, and
sets an identification number of the specified second entry in the second used identification number stored in the processing device (2A).

7. An information processing program for causing a computer to execute a process, the computer comprising a storing device (3A) comprising a plurality of storing regions allocated one to each of a plurality of virtual machines, a processing device (2A) that is connected to the storing device (3A) and that executes the plurality of virtual machines, a relay device (4A) that is connected to the processing device (2A) and that executes a relaying process, serving as a virtual switch that connects the plurality of virtual machines to one another, and a transfer processor (52A) that transfers data between the plurality of storing regions, the process comprising:
in the processing device (2A)
storing a first used identification number associated with a used entry among a plurality of first entries allocated to the transfer processor (52A) and a second used identification number associated with a used entry among a plurality of second entries allocated to the relay device (4A), the first used identification number and the second used identification number being included in a plurality of identification numbers each associated with one of a plurality of entries of a reception buffer (32) included in a first storing region allocated to a first virtual machine among the plurality of virtual machines; and
setting a smaller one of the first used identification number and the second used identification number stored in the processing device (2A), to an identification number being set in the first storing region and representing an entry of data read from the reception buffer (32) by the first virtual machine.

8. The information processing program according to claim 7, wherein the process further comprises:
in the processing device (2A)
setting first information in the first storing region, the first information representing which one of the transfer processor (52A) and the relay device (4A) is allocated to each of the plurality of entries.

9. The information processing program according to claim 8, wherein the process further comprises:
the processing device (2A)
in a case where the entry associated with the first used identification number is not used for a first given time period,
writing dummy data into each of entries from the entry associated with the first used identification number to a last entry allocated to the transfer processor (52A) and setting an identification number of the last entry in the first used identification number; and
setting the first used identification number in the identification number set in the first storing region.

10. The information processing program according to claim 8 or 9, wherein the process further comprises:
in the transfer processor (52A)
in forwarding data from a second storing region to the first storing region,
forwarding the data to a first entry specified by the first used identification number and the first information set in the first storing region; and
setting an identification number of the specified first entry in the first used identification number stored in the processing device (2A).

11. The information processing program according to any one of claims 8-10, wherein the process further comprises:
in the processing device (2A)
in a case where the entry associated with the second used identification number is not used for a second given time period,
forwarding, to the relay device (4A), dummy data for each of entries from the entry associated with the second used identification number to a last entry allocated to the relay device (4A); and
in the relay device (4A)
setting an identification number of the last entry in the second used identification number in response to receipt of the dummy data, and
setting second information in the first information in the first storing region, the second information representing that entries of the reception buffer (32) serving as writing destinations of the dummy data are each used.

12. The information processing program according to any one of claims 8-11, wherein the process further comprises
in the relay device (4A)
in forwarding data from a second storing region or an external port provided to the relay device (4A) to the first storing region,
forwarding the data to a second entry specified by the second used identification number and the first information set in the first storing region, and
setting an identification number of the specified second entry in the second used identification number stored in the processing device (2A).

13. A method for processing information in computer comprising a storing device (3A) comprising a plurality of storing regions allocated one to each of a plurality of virtual machines, a processing device (2A) that is connected to the storing device (3A) and that executes the plurality of virtual machines, a relay device (4A) that is connected to the processing device (2A) and that executes a relaying process, serving as a virtual switch that connects the plurality of virtual machines to one another, and a transfer processor (52A) that transfers data between the plurality of storing regions, the method comprising:
in the processing device (2A)
storing a first used identification number associated with a used entry among a plurality of first entries allocated to the transfer processor (52A) and a second used identification number associated with a used entry among a plurality of second entries allocated to the relay device (4A), the first used identification number and the second used identification number being included in a plurality of identification numbers each associated with one of a plurality of entries of a reception buffer (32) included in a first storing region allocated to a first virtual machine among the plurality of virtual machines; and
setting a smaller one of the first used identification number and the second used identification number stored in the processing device (2A), to an identification number being set in the first storing region and representing an entry of data read from the reception buffer (32) by the first virtual machine.

14. The method according to claim 13, further comprising:
in the processing device (2A)
setting first information in the first storing region, the first information representing which one of the transfer processor (52A) and the relay device (4A) is allocated to each of the plurality of entries.

15. The method according to claim 14, further comprising:
in the processing device (2A)
in a case where the entry associated with the first used identification number is not used for a first given time period,
writing dummy data into each of entries from the entry associated with the first used identification number to a last entry allocated to the transfer processor (52A) and setting an identification number of the last entry in the first used identification number; and
setting the first used identification number in the identification number set in the first storing region.
